(19) Europäisches Patentamt
European Patent Office
Office européen des brevets

(11) **EP 4 460 044 A1**

(12) **EUROPEAN PATENT APPLICATION**
published in accordance with Art. 153(4) EPC

(43) Date of publication:
**06.11.2024 Bulletin 2024/45**

(21) Application number: **22914408.4**

(22) Date of filing: **20.12.2022**

(51) International Patent Classification (IPC):
***H04W 4/02*** *(2018.01)*

(52) Cooperative Patent Classification (CPC):
**H04W 4/02**

(86) International application number:
**PCT/CN2022/140400**

(87) International publication number:
**WO 2023/125154 (06.07.2023 Gazette 2023/27)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **29.12.2021 CN 202111644152**

(71) Applicant: **VIVO MOBILE COMMUNICATION CO.,
LTD.**
**Dongguan, Guangdong 523863 (CN)**

(72) Inventors:
• **DING, Shengli**
**Dongguan, Guangdong 523863 (CN)**
• **JIANG, Dajie**
**Dongguan, Guangdong 523863 (CN)**
• **YUAN, Yannan**
**Dongguan, Guangdong 523863 (CN)**

(74) Representative: **Murgitroyd & Company**
**165-169 Scotland Street**
**Glasgow G5 8PL (GB)**

(54) **SENSING SIGNAL PERIOD DETERMINATION METHOD AND APPARATUS, AND COMMUNICATION DEVICE AND STORAGE MEDIUM**

(57) This application discloses a method and apparatus for determining sensing signal period, a communication device, and a storage medium, and pertains to the field of communication technologies. The method for determining sensing signal period in embodiments of this application includes: obtaining, by a first device, first information, where the first information includes at least one of the following: sensing prior information, coverage requirement information, sensing object type information, and motion parameter of a sensing object; and determining, by the first device based on the first information, a target sensing signal period value from a sensing signal period parameter set, where the sensing signal period parameter set includes at least one sensing signal period value. The sensing prior information is used to indicate a motion parameter range of the sensing object. The coverage requirement information is used to indicate a range coverage of the sensing object. The sensing object type information is used to indicate a velocity range of the sensing object.

FIG. 2

**Description**

**CROSS-REFERENCE TO RELATED APPLICATION**

This application claims priority to Chinese Patent Application No. 202111644152.1, filed in China on December 29, 2021, which is incorporated herein by reference in its entirety.

**TECHNICAL FIELD**

This application pertains to the field of communication technologies and specifically relates to a method and apparatus for determining sensing signal period, a communication device, and a storage medium.

**BACKGROUND**

With the continuous development of communication technologies, integrated sensing and communication (Integrated Sensing And Communication, ISAC) has become a key technology of wireless communication systems to support many important application scenarios. Sensing signals are used for radar detection in integrated sensing and communication scenarios. In a case that a sensing signal is used in such scenario, it is necessary to generate, transmit, and receive a sensing signal based on a sensing signal period value. However, at present, no specific solution has been given for how a sensing signal period value is determined. Therefore, how a sensing signal period is determined is a problem to be solved urgently.

**SUMMARY**

Embodiments of this application provide a method and apparatus for determining sensing signal period, a communication device, and a storage medium, so as to solve the problem of how a sensing signal period is determined in integrated sensing and communication scenarios.

According to a first aspect, a method for determining sensing signal period is provided. The method includes: obtaining, by a first device, first information, where the first information includes at least one of the following: sensing prior information, coverage requirement information, sensing object type information, and motion parameter of a sensing object; and determining, by the first device based on the first information, a target sensing signal period value from a sensing signal period parameter set, where the sensing signal period parameter set includes at least one sensing signal period value; where the sensing prior information is used to indicate a motion parameter range of the sensing object, the coverage requirement information is used to indicate a range coverage of the sensing object, and the sensing object type information is used to indicate a velocity range of the sensing object.

According to a second aspect, an apparatus for determining sensing signal period is provided. The apparatus for determining sensing signal period includes an obtaining module and a determining module. The obtaining module is configured to obtain first information, where the first information includes at least one of the following: sensing prior information, coverage requirement information, sensing object type information, and motion parameter of a sensing object. The sensing prior information is used to indicate a motion parameter range of the sensing object, the coverage requirement information is used to indicate a range coverage of the sensing object, and the sensing object type information is used to indicate a velocity range of the sensing object. The determining module is configured to determine, based on the first information obtained by the obtaining module, a target sensing signal period value from a sensing signal period parameter set, where the sensing signal period parameter set includes at least one sensing signal period value.

According to a third aspect, a communication device is provided. The communication device includes a processor and a memory. The memory stores a program or instructions executable on the processor. When the program or instructions are executed by the processor, the steps of the method according to the first aspect are implemented.

According to a fourth aspect, a communication device is provided, including a processor and a communication interface. The processor is configured to: obtain first information, where the first information includes at least one of the following: sensing prior information, coverage requirement information, sensing object type information, and motion parameter of a sensing object; and determine, based on the first information, a target sensing signal period value from a sensing signal period parameter set, where the sensing signal period parameter set includes at least one sensing signal period value; where the sensing prior information is used to indicate a motion parameter range of the sensing object, the coverage requirement information is used to indicate a range coverage of the sensing object, and the sensing object type information is used to indicate a velocity range of the sensing object.

According to a fifth aspect, a readable storage medium is provided. The readable storage medium stores a program or instructions, and when the program or instructions are executed by a processor, the steps of the method according to the first aspect are implemented.

According to a sixth aspect, a chip is provided. The chip includes a processor and a communication interface. The communication interface is coupled to the processor, and the processor is configured to run a program or instructions to implement the method according to the first aspect.

According to a seventh aspect, a computer program/program product is provided. The computer program/program product is stored in a storage medium, and the computer program/program product is executed by at least one processor to implement the steps of the method for determining sensing signal period according to the first aspect.

In the embodiments of this application, the first device can determine a sensing signal period value based on sensing prior information to be sensed, coverage requirement information to be sensed, sensing object type information to be sensed, and/or motion parameter of a sensing object, so as to adaptively adjust the sensing signal period value, so that sensing object detection performance of radar can satisfy a changing sensing requirement and/or motion parameter, and optimize time resource allocation for integrated sensing and communication.

## BRIEF DESCRIPTION OF DRAWINGS

FIG. 1 is a schematic architectural diagram of a wireless communication system according to an embodiment of this application;

FIG. 2 is a first flowchart of a method for determining sensing signal period according to an embodiment of this application;

FIG. 3 is a schematic diagram of a motion mode in a sensing signal period parameter set according to an embodiment of this application;

FIG. 4 is a schematic diagram of a relationship between a velocity and range of a sensing object and a sensing signal period according to an embodiment of this application;

FIG. 5 is a second flowchart of a method for determining sensing signal period according to an embodiment of this application;

FIG. 6 is a third flowchart of a method for determining sensing signal period according to an embodiment of this application;

FIG. 7 is a fourth flowchart of a method for determining sensing signal period according to an embodiment of this application;

FIG. 8 is a schematic structural diagram of an apparatus for determining sensing signal period according to an embodiment of this application;

FIG. 9 is a schematic diagram of a hardware structure of a communication device according to an embodiment of this application;

FIG. 10 is a schematic diagram of a hardware structure of UE according to an embodiment of this application;

FIG. 11 is a schematic diagram of a hardware structure of a base station according to an embodiment of this application; and

FIG. 12 is a schematic diagram of a hardware structure of a sensing function network element according to an embodiment of this application.

## DESCRIPTION OF EMBODIMENTS

The following clearly describes the technical solutions in the embodiments of this application with reference to the accompanying drawings in the embodiments of this application. Apparently, the described embodiments are only some rather than all of the embodiments of this application. All other embodiments obtained by persons of ordinary skill in the art based on the embodiments of this application fall within the protection scope of this application.

The terms "first", "second", and the like in the specification and claims of this application are used to distinguish between similar objects rather than to describe a specific order or sequence. It should be understood that the terms used in this way are interchangeable in appropriate circumstances such that the embodiments of this application can be implemented in other orders than the order illustrated or described herein. In addition, objects distinguished by "first" and "second" are generally of a same type, and the quantities of the objects are not limited. For example, there may be one or more first objects. In addition, in this specification and claims, "and/or" indicates at least one of the connected objects, and the character "/" generally indicates an "or" relationship between the contextually associated objects.

It should be noted that technologies described in the embodiments of this application are not limited to a long term evolution (Long Term Evolution, LTE) or LTE-Advanced (LTE-Advanced, LTE-A) system, and may also be applied to other wireless communication systems, for example, code division multiple access (Code Division Multiple Access, CDMA), time division multiple access (Time Division Multiple Access, TDMA), frequency division multiple access (Frequency Division Multiple Access, FDMA), orthogonal frequency division multiple access (Orthogonal Frequency Division Multiple Access, OFDMA), single-carrier frequency division multiple access (Single-carrier Frequency Division Multiple Access, SC-FDMA), and other systems. The terms "system" and "network" in the embodiments of this application are often used interchangeably, and the technology described herein may be used in the above-mentioned systems and radio technologies as well as other systems and radio technologies. In the following descriptions, a new radio (New Radio, NR) system is described for an illustration purpose, and NR terms are used in most of the following descriptions, although these technologies may also be applied to other applications than an NR system application, for example, the 6th generation (6th Generation, 6G) communication system.

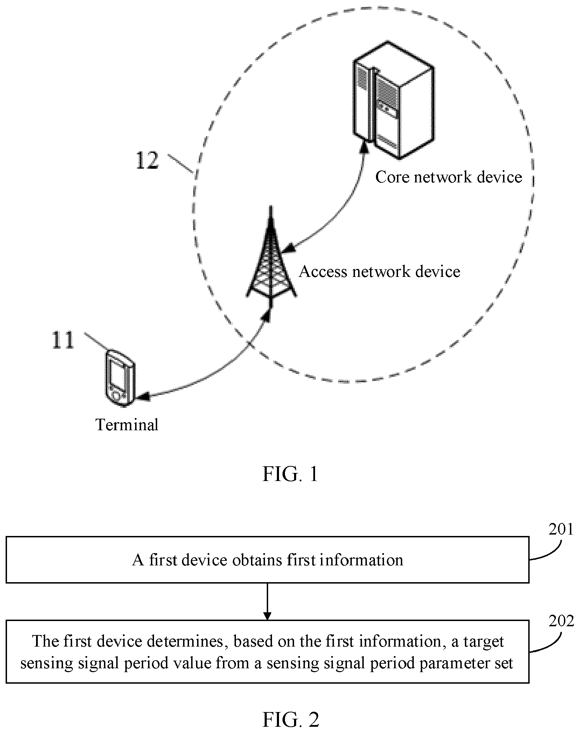

FIG. 1 is a block diagram of a wireless communication system to which the embodiments of this application may be applied. The wireless communication system includes a terminal 11 and a network-side device 12. The terminal 11 may be a terminal-side device, such as a mobile phone, a tablet personal computer (Tablet Personal Computer), a laptop computer (Laptop Computer) or a notebook computer, a personal digital assistant (Personal Digital Assistant, PDA), a palmtop computer, a netbook, an ultra-mobile personal computer (ultra-mobile personal computer, UMPC), a mobile Internet device (Mobile Internet Device, MID), an augmented reality (Augmented Reality, AR)/virtual reality (Virtual Reality, VR) device, a robot, a wearable device (Wearable Device), vehicle user equipment (VUE), or pedestrian user equipment (PUE), a smart appliance (a home appliance with a wireless communication function, for example, a refrigerator, a television, a washing machine, or furniture), a game console, a personal computer (personal computer, PC), a teller machine, or a self-service machine. The wearable device includes a smart watch, a smart band, a smart earphone, smart glasses, smart jewelry (a smart bangle, a smart bracelet, a smart ring, a smart necklace, a smart foot bangle, a smart anklet, or the like), a smart wristband, smart clothing, or the like. It should be noted that a specific type of the terminal 11 is not limited in the embodiments of this application. The network-side device 12 can include an access network device or core network device, where the access network device can also be referred to as a radio access network device, radio access network (Radio Access Network, RAN), radio access network function, or radio access network unit. The access network device can include base stations, wireless local area network (Wireless Local Area Network, WLAN) access points, wireless fidelity (Wireless Fidelity, WiFi) nodes, or the like. The base station can be referred to as Node B, evolved Node B (eNB), access point, base transceiver station (Base Transceiver Station, BTS), radio base station, radio transceiver, basic service set (Basic Service Set, BSS), extended service set (Extended Service Set, ESS), home Node B, home evolved Node B, transmitting receiving point (Transmitting Receiving Point, TRP), or other appropriate terms in the field. As long as the same technical effect is achieved, the base station is not limited to any specific technical terminology. It should be noted that in the embodiments of this application, only the base station in the NR system is introduced as an example, and the specific type of the base station is not limited. The core network device can include but is not limited to at least one of the following: core network node, core network function, mobility management entity (Mobility Management Entity, MME), access and mobility management function (Access and Mobility Management Function, AMF), session management function (Session Management Function, SMF), user plane function (User Plane Function, UPF), policy control function

(Policy Control Function, PCF), policy and charging rules function (Policy and Charging Rules Function, PCRF), edge application server discovery function (Edge Application Server Discovery Function, EASDF), unified data management (Unified Data Management, UDM), unified data repository (Unified Data Repository, UDR), home subscriber server (Home Subscriber Server, HSS), centralized network configuration (Centralized network configuration, CNC), network repository function (Network Repository Function, NRF), network exposure function (Network Exposure Function, NEF), local NEF (Local NEF, L-NEF), binding support function (Binding Support Function, BSF), application function (Application Function, AF), and the like. It should be noted that in the embodiments of this application, only the core network device in the NR system is introduced as an example, and the specific type of the core network device is not limited.

Some concepts and/or terms used in the method and apparatus for determining sensing signal period, communication device, and storage medium that are provided in the embodiments of this application are explained below.

1. Integrated sensing and communication/integrated sensing & communication

Future 5th generation (5th Generation, 5G) and 6G wireless communication systems are expected to provide various high-precision sensing services, such as indoor positioning for robot navigation, Wi-Fi sensing for smart home devices, and radar sensing for self-driving vehicles. Sensing and communication systems are often designed separately and occupy different bands. In addition, because of wide deployment of millimeter wave and massive (Multiple Input Multiple Output, MIMO) technologies, a communication signal in a future wireless communication system usually has high resolution in both time domain and angle domain. This makes it possible to implement high-precision sensing by using a communication signal. Therefore, it is best to co-design sensing and communication systems so that they can share a same band and hardware to improve frequency efficiency and reduce hardware costs. This has led to research into integrated sensing and communication (Integrated Sensing And Communication, ISAC). ISAC will become a key technology in future wireless communication systems to support many important application scenarios. For example, in a future self-driving vehicle network, a self-driving vehicle obtains a large amount of information from the network, including an ultra-high-resolution map and near real-time information, so as to perform navigation and avoid an upcoming traffic congestion. Under a same situation, a radar sensor in a self-driving vehicle should provide a powerful, high-resolution obstacle detection function at a resolution of the order of centimeters. The ISAC technology for self-driving vehicles provides the possibility of high data rate communication and high resolution obstacle detection using the same hardware and spectrum resources. Other applications of ISAC include Wi-Fi-based indoor positioning and activity recognition, communication and sensing for unmanned aerial vehicles, extended reality (Extended Reality, XR) (for example, virtual reality VR, augmented reality AR, or mixed reality (Mix reality, MR)), integrated radar and communication, and the like. These applications have different requirements, restrictions, and regulations. ISAC has attracted tremendous research interest and attention from the academia and industry. For example, there are a growing number of recent academic publications on ISAC, ranging from transceiver architecture design, ISAC waveform design, joint coding design, time-frequency-spatial signal processing, experimental performance latency, prototype design, and field testing.

ISAC achieves the low-cost implementation of integrated communication and sensing through hardware device sharing and software-defined functions, and has the following characteristics: unified and simplified architecture, reconfigurable and expandable functions, and improved efficiency and reduced costs. Three advantages of integrated sensing and communication are reduced device costs and size, increased spectrum utilization, and improved system performance.

The development of ISAC is usually divided into four stages: coexistence, co-operation, co-design, and collaboration.

Coexistence: Communication and sensing are two separate systems that interfere with each other. The main ways to solve such interference include: isolation by range, isolation by band, time division, MIMO technology, precoding, and the like.

Co-operation: Communication and sensing share a hardware platform and use common information to enhance their common performance. Power allocation between the two has a significant influence on system performance. The main problems are a low signal-to-noise ratio, mutual interference, and a low throughput.

Co-design: Communication and sensing become a completely joint system, including joint signal design, waveform design, coding design, and the like. In an early stage, the focus is on linear frequency modulation waveforms, spread spectrum waveforms, and the like, and in a later stage, the focus is on orthogonal frequency division multiplexing (Orthogonal Frequency Division Multiplexing, OFDM) waveforms, MIMO technology, and the like.

Collaboration: Multiple integrated sensing and communication nodes cooperate to achieve a common goal. For example, radar detection information is shared through communication data transmission, as embodied by driver assistance systems, radar assisted communication, and the like.

At present, the typical scenarios of integrated sensing and communication that are expected to be realized by technology upgrade according to the 5G communication system architecture are shown in Table 1.

**Table 1 (typical scenarios of integrated sensing and communication)**

| Wireless sensing category | Sensing function | Application scenario |
|---|---|---|
| Large-scale macro sensing | Weather, air quality, and others | Meteorology, agriculture, and life services |
| | Vehicle flow (intersections) and pedestrian flow (subway entrances) | Smart city, smart transportation, and commercial services |
| | Animal activities, migration, and others | Livestock industry, ecological environment protection, and others |
| | Target tracking, ranging, velocity measurement, shape contour, and others | Many application scenarios of traditional radar |
| | Three-dimensional map construction | Smart driving, navigation, and smart city |
| Near-range refined sensing | Action posture recognition | Smart interaction of smartphones, gaming, smart home devices |
| | Heartbeat, breathing, and others | Health and medical care |
| | Imaging, material detection, and others | Security check, industry, and others |

2. Radar Technology

Radar (Radio Detection and Ranging) refers to "radio detection and ranging", that is, discovering and determining a range of a target by transmitting a radio wave and receiving an echo reflected by the target. With the development of radar technology, radar detection not only measures a range of a target, but also includes measuring a velocity, azimuth, and pitch angle of the target, and extracting more information about the target from the above information, including a size and a shape of the target.

The radar technology was initially used for military purposes to detect targets such as aircraft, missiles, vehicles, and ships. With the development of technology and the evolution of society, radar is increasingly used in civilian scenarios. Atypical application is weather radar which measures an echo of meteorological targets such as clouds and rain to determine information about a location and intensity of clouds and rain for weather forecasting. Furthermore, with the booming development of the electronics information industry, internet of things, communication technology, and the like, the radar technology has started to enter people's daily life application, greatly improving the convenience and safety of work and life. For example, automotive radar provides early warning information for vehicle driving by measuring a range and relative velocity between vehicles, between vehicles and surrounding environmental objects, and between vehicles and pedestrians, greatly improving the safety level of road traffic.

At the technical level, there are many ways to classify radar. By location relationship between radar transmitting and receiving sites, radar may be classified into: single-site radar and double-site radar. For single-site radar, a signal transmitter and receiver are integrated and share an antenna. The advantage is that a target echo signal and a local oscillator of the receiver are naturally coherent and thus signal processing is convenient. The disadvantage is that signal transmission and reception cannot be performed at the same time, and only signal waveforms with a certain duty cycle can be adopted. Consequently, a detection blind spot is caused and a complex algorithm needs to be adopted for compensation. Alternatively, signal transmission and reception are performed at the same time, and transmission and reception are strictly separated, but this is difficult for high-power military radar. For double-site radar, a signal transmitter and receiver are located at different locations. The advantage is that a signal can be transmitted and received at the same time, and continuous wave waveforms can be used for detection. The disadvantage is that it is difficult to achieve co-frequency and coherence between the receiver and the transmitter, leading to complex signal processing.

In wireless sensing application of integrated sensing and communication, the radar technology may adopt either a single-site radar mode or a double-site radar mode.

In the single-site radar mode, signal transmission and reception share an antenna, and a to-be-received signal and a to-be-transmitted signal enter different radio frequency processing links via a circulator. In this mode, continuous wave signal waveforms can be used to achieve blind spot-free detection, on the premise that the to-be-received signal and the to-be-transmitted signal need to be well separated, usually requiring an isolation of about 100 dB, to avoid flooding of the to-be-received signal by the leakage of the to-be transmitted signal. Since a receiver in single-site radar has all information of the to-be transmitted signal, signal processing may be carried out by matching filtering (pulse compression) to obtain a high signal processing gain.

In the double-site radar mode, there is no isolation problem between signal transmission and reception, greatly simplifying the complexity of hardware. Since radar signal processing is on a basis of known information, in the application of 5G NR integrated sensing and communication, known information such as synchronization signal (for example, primary synchronization signal (Primary Synchronization Signal, PSS)/secondary synchronization signal (Secondary Synchronization Signal, SSS)), reference signal (for example, demodulation reference signal (Demodulation Reference Signal, DMRS)/channel state information reference signal (Channel State Information Reference Signal, CSI-RS)) may be used for radar signal processing. However, due to the periodicity of synchronization signals, reference signals, and the like, an ambiguity diagram of signal waveforms is no longer a thumbtack shape, but a thumbtack board shape, the ambiguity of latency and Doppler will increase, and the gain of a main lobe is much lower than that in the single-site radar mode, reducing the measurement range of distance and velocity. With an appropriate parameter set design, the measurement range of distance and velocity can satisfy measurement requirements of common targets such as vehicles and pedestrians. In addition, the measurement accuracy of double-site radar is related to a location of a target relative to transmitting and receiving sites, and therefore, an appropriate transmitting and receiving site pair needs to be selected to improve the detection performance.

The following describes in detail the method for determining sensing signal period provided in the embodiments of this application through some embodiments and application scenarios thereof with reference to the accompanying drawings.

An embodiment of this application provides a method for determining sensing signal period. FIG. 2 is a flowchart of a method for determining sensing signal period according to an embodiment of this application. As shown in FIG. 2, the method for determining sensing signal period provided in this embodiment of this application may include the following steps 201 and 202.

Step 201. A first device obtains first information.

In this embodiment of this application, the first information includes at least one of the following: sensing prior information, coverage requirement information, sensing object type information, and motion parameter of a sensing object. The sensing prior information is used to indicate a motion parameter range of the sensing object, the coverage requirement information is used to indicate a range coverage of the sensing object, and the sensing object type information is used to indicate a velocity range of the sensing object.

Optionally, in this embodiment of this application, the first information may be pre-configured, predefined, agreed in a protocol, autonomously determined by the first device, generated in real time, sent by another device, or the like.

Optionally, in this embodiment of this application, step 201 may be specifically implemented by the following step 2001 or step 2002.

Step 2001. The first device receives the first information.

In step 2001, the first information includes at least one of the following: sensing prior information, coverage requirement information, sensing object type information, and motion parameter of a sensing object. The motion parameter of the sensing object may be a motion parameter obtained by another device by processing a radar signal, and the motion parameter is sent to the first device.

Optionally, in this embodiment of this application, the first device may receive the first information from the another device. In a case that the first device is UE, the another device may be a sensing function network element, another application server, or the like. In a case that the first device is a sensing function network element, the another device may be UE, another application server, or the like.

Step 2002. The first device processes a radar signal to obtain the first information.

In step 2002, the first information includes the motion parameter of the sensing object.

It should be noted that in an initial search stage, the first device may receive the first information from another device. In the last sensing signal frame of the initial search stage or in a tracking stage, the first device may process the radar signal to obtain the first information used for determining a sensing signal period of a next sensing signal frame.

Specifically, (1) A sensing node may perform radar signal processing on obtained echo data (that is, echo data obtained by sending, in the initial search stage or tracking stage, a generated sensing signal, and receiving a reflected echo signal corresponding to the sensing signal, such as target echo data mentioned in the following embodiment) to obtain the motion parameter of the sensing object.

(2) A sensing node may perform radar signal processing on obtained echo data to obtain the motion parameter of the sensing object, and send the motion parameter of the sensing object to a sensing function network element.

(3) A sensing node may send obtained echo data to a sensing function network element, so that the sensing function network element performs radar signal processing on the echo data to obtain the motion parameter of the sensing object.

(4) A sensing node may send obtained echo data to a sensing function network element, so that the sensing function network element performs radar signal processing on the echo data to obtain the motion parameter of the sensing object, and sends the motion parameter of the sensing object to the sensing node.

(5) A sensing node may perform partial calculation of radar signal processing on obtained echo data to obtain an intermediate sensing result of the sensing object, and send the intermediate sensing result to a sensing function network element, so that the sensing function network element performs remaining calculation of the radar signal processing on the intermediate sensing result to obtain the motion parameter of the sensing object.

(6) A sensing node may perform partial calculation of radar signal processing on obtained echo data to obtain an intermediate sensing result of the sensing object, and send the intermediate sensing result to a sensing function network element, so that the sensing function network element performs remaining calculation of the radar signal processing on the intermediate sensing result to obtain the motion parameter of the sensing object, and sends the motion parameter of the sensing object to the sensing node.

It should be noted that the initial search stage refers to a process, at the beginning of radar detection, of discovering a target (that is, the sensing object) by traversing each angle interval, range interval and/or velocity interval in a scope specified by sensing prior information in a sensing requirement. In a case that a specified target parameter is obtained, the search stage ends.

The tracking stage refers to that after discovering the sensing object through the initial search stage and obtaining the specified target parameter, radar continuously detects the sensing object by using the target parameter or a certain range containing the target parameter, and updates the target parameter based on the detection result.

Optionally, in this embodiment of this application, the first device may be an integrated sensing and communication node (hereinafter referred to as a sensing node) or a sensing function network element.

It should be noted that the sensing node in this embodiment of this application refers to a device that transmits and/or receives a sensing signal. The sensing function network element refers to a network node in a core network and/or wireless access network that is responsible for at least one of the functions of sensing request processing, sensing resource scheduling, sensing information exchange, sensing data processing, and the like, and may be a network element upgraded from an AMF or location management function (Location Management Function, LMF) in an existing 5G network, or may be another network node or newly defined network node. This is not limited in this embodiment of this application.

Optionally, in this embodiment of this application, the sensing node may be any of the following: base station, user equipment (User Equipment, UE), TRP, reconfigurable intelligent surface (Reconfigurable Intelligent Surface, RIS), access point (Access Point, AP), and the like.

It should be noted that the sensing prior information refers to information, provided to the sensing node, about a spatial scope and/or motion characteristic of a sensing target or sensing area, and such information helps the sensing node to narrow down a search scope. The sensing prior information may include at least one of the following: spatial scope prior information: range or location scope, angle interval, and/or the like of target to be sensed or sensing area; and motion characteristic prior information: velocity range, acceleration range, and/or the like of target to be sensed.

Optionally, in this embodiment of this application, the sensing prior information includes at least one of the following: sensing velocity prior information and sensing range prior information.

Optionally, in this embodiment of this application, the coverage requirement information is determined by at least one of the following: regional range of sensing object, location information of sensing node, and range coverage capability of sensing node.

In one case, the coverage requirement information may be determined based on all of regional range of sensing object, location information of sensing node, and range coverage capability of sensing node.

It should be noted that in a case that a regional range of sensing object cannot be completely covered by a single sensing node, with the scheduling of the sensing function network element, multiple sensing nodes cooperate to cover the regional range of sensing object.

Optionally, in this embodiment of this application, the location information of sensing node includes the following two cases.

(1) For a sensing node at a fixed location, such as a base station or a TRP, the location information of sensing node is known. The location information of sensing node may be obtained by accessing a network function storing the location information of sensing node (for example, reporting by a network management system, unified data management UDM, or the sensing node).

(2) For a mobile sensing node, such as UE, before radar detection is performed, a sensing function network element may first obtain the location information of sensing node. The method for obtaining the location information may be requesting a positioning management function or another service function to obtain location information. The positioning management function may be a location management function LMF, or a network function that receives location information for minimization of drive test (Minimization of Drive Test, MDT). The positioning service function may be an application function (Application Function, AF), and the AF may be a positioning server such as a Wi-Fi, bluetooth (Bluetooth), Zigbee (Zigbee) network, or ultra wideband (Ultra Wideband, UWB), or may be an application function (for example, a map application) that can obtain positioning information from the global positioning system (Global Positioning System, GPS) and the like.

It should be noted that the range coverage capability of sensing node refers to a coverage capability of a sensing node to satisfy a sensing indicator in a sensing requirement by using software and hardware capabilities not used by a high-priority task. In a case of no high-priority task, the range coverage capability of sensing node is a coverage capability of a sensing node to satisfy a sensing indicator requirement by using all software and hardware capabilities.

Optionally, in this embodiment of this application, the velocity range of the sensing object indicated by the sensing object type information includes at least one of the following: low-velocity target: the type of the sensing object is pedestrian, with a movement velocity of below 15 km/h; medium-velocity target: the type of the sensing object is bicycle, with a movement velocity of below 30 km/h; and high-velocity target: the type of the sensing object is vehicle, with a movement velocity of above 30 km/h.

Optionally, in this embodiment of this application, the motion parameter of the sensing object includes at least one of the following: range information, velocity information, and motion direction, where the motion direction is the sensing object approaching the sensing node or the sensing object leaving the sensing node.

It should be noted that in an integrated sensing and communication scenario, sensing objects have large diversity and variability in range and velocity. For example, a movement velocity of high-velocity vehicles may reach 30 m/s, while a movement velocity of pedestrians on the side of a road is usually at an order of magnitude of 1 m/s or below. A speeding car may move from thousands of kilometers away to just a few meters away. Therefore, in the application of integrated sensing and communication, a value of a sensing signal period for radar detection may be adaptively adjusted with a motion parameter of a sensing object.

Step 202. The first device determines, based on the first information, a target sensing signal period value from a sensing signal period parameter set.

In this embodiment of this application, the sensing signal period parameter set includes at least one sensing signal period value.

It should be noted that the sensing signal period value in this embodiment of this application refers to a time length of a sensing signal corresponding to one fast time-domain radar signal processing performed by a sensing node.

Optionally, in this embodiment of this application, the sensing signal period parameter set may be pre-designed and stored in a sensing function network element, or in a network node that a sensing function network element can access.

Optionally, in this embodiment of this application, the sensing signal period parameter set has at least one of the following characteristics:

the sensing signal period parameter set includes multiple different sensing signal period values;
a first part of sensing signal period values in the sensing signal period parameter set satisfies a preset maximum sensing object range requirement, and a second part of the sensing signal period values in the sensing signal period parameter set satisfies a preset maximum sensing object velocity requirement; and
at least two coprime sensing signal period values are present in the sensing signal period parameter set.

Optionally, in this embodiment of this application, a target part of the sensing signal period values in the sensing signal period parameter set satisfies both the preset maximum sensing object range requirement and the preset maximum sensing object velocity requirement, and the target part of the sensing signal period values includes at least one of the following: some of the first part of the sensing signal period values, and some of the second part of the sensing signal period values.

Optionally, in this embodiment of this application, the sensing signal period parameter set includes at least two first sensing signal period subsets, each first sensing signal period subset corresponds to one type of motion mode, each first sensing signal period subset includes at least one sensing signal period value, the sensing signal period values included in the at least two first sensing signal period subsets are different, and the sensing signal period values included in the at least two first sensing signal period subsets either intersect or do not intersect.

It should be noted that "the sensing signal period values of the at least two first sensing signal period subsets either intersect or do not intersect" may be understood as: sensing signal period values of all of the at least two first sensing signal period subsets are completely different; sensing signal period values of all of the at least two first sensing signal period subsets are partially the same; or sensing signal period values of some of the at least two first sensing signal period subsets are partially the same.

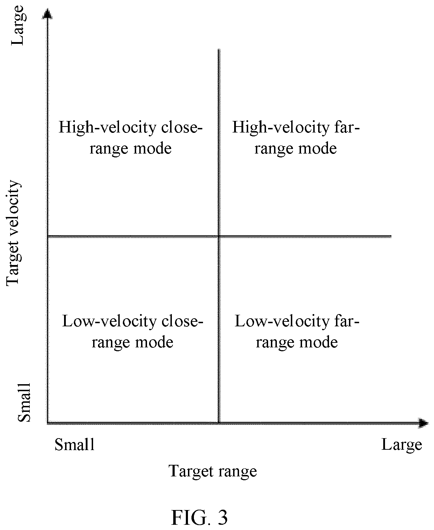

Optionally, in this embodiment of this application, the sensing signal period parameter set may be classified into four motion modes by magnitude of the range (that is, target range) of the sensing object and magnitude of the velocity (that is, target velocity) of the sensing object. As shown in FIG. 3, these four motion modes include: low-velocity close-range mode, low-velocity far-range mode, high-velocity close-range mode, and high-velocity far-range mode.

Optionally, in this embodiment of this application, the high-velocity far-range mode includes at least one sensing signal period value pair used in a case that a first constraint condition and a second constraint condition cannot be satisfied at the same time. The sensing signal period value pair is two sensing signal period values that are coprime to each other. One of the sensing signal period values satisfies the first constraint condition, and the other of the sensing signal period values satisfies the second constraint condition.

It should be noted that a range threshold and/or velocity threshold for the motion mode division may vary with device characteristics. For example, a range threshold for a macro base station with wide area coverage differs from a range threshold of a micro base station with hotspot coverage.

Optionally, in this embodiment of this application, the sensing signal period parameter set includes at least one of the following: a sensing signal period parameter subset of a sensing-oriented signal, a sensing signal period parameter subset of a communication-oriented signal, and a sensing signal period parameter subset of an integrated sensing and communication signal.

It can be understood that in each mode of the sensing signal period parameter set, a subset to which a value of each sensing signal period belongs may be at least one of sensing signal period parameter subset for sensing-oriented signal, sensing signal period parameter subset for communication-oriented signal, and sensing signal period parameter subset for integrated sensing and communication signal.

It should be noted that the sensing signal period parameter subset for sensing-oriented signal may be a sensing signal period parameter set consisting of multiple sensing signal periods designed based on multiple typical targets in integrated sensing and communication applications and a typical coverage in integrated sensing and communication scenarios and having the foregoing attribute requirements taken into consideration.

Optionally, in this embodiment of this application, the sensing-oriented signal may include at least one of the following: linear frequency modulation (Linear Frequency Modulation, LFM) pulse signal, frequency modulated continuous wave (Frequency Modulated Continuous Wave, FMCW) radar signal, OFDM radar signal, phase-coded radar signal, spread spectrum coded radar signal, and the like.

Optionally, in this embodiment of this application, the communication-oriented signal may include at least one of the following: NR signal, Wi-Fi signal, and the like.

Optionally, in this embodiment of this application, for a sensing signal that is a sensing-oriented signal, that is, radar signal, the sensing signal period may be any of the following: pulse repetition period of pulse radar signal, and chirp (chirp) period of FMCW radar signal.

For a sensing signal that is a communication-oriented signal, for example, NR signal or Wi-Fi signal, the sensing signal period may be any of the following: signal period of NR synchronization signal and PBCH block (Synchronization Signal and PBCH Block, SSB), integer multiple of symbol duration of NR demodulation reference signal (Demodulation Reference Signal, DM-RS), and sequence period of Wi-Fi preamble (Preamble).

For a sensing signal that is an integrated sensing and communication signal, for example, multi-symbol pulse OFDM radar signal, the sensing signal period may be pulse repetition period.

Optionally, in this embodiment of this application, a period value of the sensing-oriented signal is any value that satisfies a preset maximum unambiguous velocity (Maximum Unambiguous Velocity, MUV) requirement and/or a preset maximum unambiguous range (Maximum Unambiguous Range, MUR) requirement.

Optionally, in this embodiment of this application, MUV intervals in radar detection are classified into the following two cases.

(1) A velocity direction of a sensing object is unknown: In an initial search stage, in a case that the sensing prior information does not indicate a motion velocity direction (approaching or leaving) of the sensing object, radar does not know the velocity direction of the sensing object, and in this case, an unambiguous velocity interval is $[-1/2T, 1/2T]$ in radar detection.

(2) A velocity direction of a sensing object is known: In a tracking stage or an initial search stage, in a case that the sensing prior information indicates a motion velocity direction (approaching or leaving) of the sensing object, radar knows the motion velocity direction of the sensing object, and in this case, an unambiguous velocity interval is $[0, 1/T]$ or $[1/T, 0]$ in radar detection.

It should be noted that a positive or negative velocity indicates that the sensing object is leaving or approaching the radar. The positive or negative velocity may be defined by polarities of a coordinate system in specific application. It may be defined that the sensing object leaving the radar is positive velocity, or it may be defined that the sensing object leaving the radar is negative velocity.

Optionally, in this embodiment of this application, an MUR in radar detection is $cT/2$.

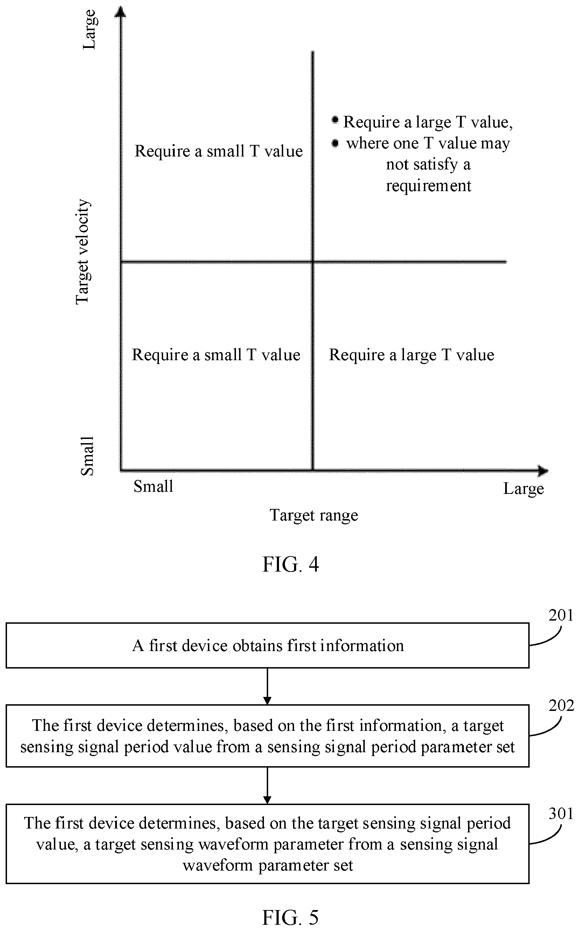

It should be noted that sensing signal period requirements of MUV and MUR are contrary in radar detection. By magnitude of velocity (that is, target velocity) of the sensing object and magnitude of range (target range) of the sensing object, there may be four classified cases as shown in FIG. 4.

(1) Low velocity and small range: A requirement for a value of a sensing signal period (T) is low, and it is easy to satisfy both an MUV requirement and an MUR requirement at the same time.

(2) Low velocity and large range: In this case, a sensing signal period T requirement of MUV is low in radar detection, and a large sensing signal period T value is required for MUR in radar detection, resulting in no conflict between the two. With the MUV requirement and the MUR requirement considered, a large sensing signal period T value satisfies both the MUV requirement and the MUR requirement.

(3) High velocity and small range: In this case, a sensing signal period T requirement of MUR is low in radar detection, and a small sensing signal period T value is required for MUV in radar detection, resulting in no conflict between the two. With the MUV requirement and the MUR requirement considered, a small sensing signal period T value satisfies both the MUV requirement and the MUR requirement.

(4) High velocity and large range: In this case, a small sensing signal period T value is required for MUV in radar detection, and a large sensing signal period T value is required for MUR in radar detection, resulting in a conflict between the two. One sensing signal period T value may not be able to satisfy both the MUV requirement and the MUR requirement, and in this case, multiple different values configured for sensing signal period T are required to satisfy the MUV requirement and the MUR requirement.

Optionally, in this embodiment of this application, a period value of the communication-oriented signal includes any one of the following: a sum of any integer number of symbol periods corresponding to the communication-oriented signal; and any combination of synchronization signal period value and/or reference signal time domain interval.

For example, the communication-oriented signal being an NR signal is used as an example. The communication-oriented signal uses an OFDM signal waveform, with a smallest unit of time domain resource allocation being OFDM symbol period. Therefore, a sensing signal period includes an integer number of symbol periods, and a value of the sensing signal period is a sum of the integer number of the symbol periods.

In a self-transmit and self-receive scenario, a receiving end knows all sent information, and any signal may be used as a sensing signal, for example, synchronization signal, reference signal, or data signal. A value of a sensing signal period may be a sum of any integer number of symbol periods.

Optionally, in this embodiment of this application, for a sensing signal period parameter subset for an integrated sensing and communication signal, a period value of the integrated sensing and communication signal takes into account both communication and sensing requirements. The value of the sensing signal period is flexible on the one hand, as in the case of a sensing-oriented signal, and is limited by a communication function to some extent on the other hand, as in the case of a communication-oriented signal. Firstly, the sensing signal period includes multiple communication symbols; and secondly, with reference to a duty cycle design, the sensing signal period may take continuous values within a certain range.

Optionally, in this embodiment of this application, step 202 may be specifically implemented by the following step 202a and step 202b.

Step 202a. The first device determines a target MUV and a target MUR based on the first information.

In this embodiment of this application, the target sensing signal period value is related to an MUV interval and an MUR in radar detection, that is, the first device may first determine the MUV interval and the MUR, and then determine the target sensing signal period value based on the MUV interval and the MUR.

Optionally, in a first implementation of this application, the first information includes the coverage requirement information and the sensing object type information. Step 202a may be specifically implemented by the following step 202a1 and step 202a2.

Step 202a1. The first device determines the target MUV based on the sensing object type information.

Step 202a2. The first device determines the target MUR based on the coverage requirement information.

It can be understood that in an initial search stage, in a case that there is no sensing range prior information or sensing velocity prior information, the first device may set/determine a value of MUV (that is, the target MUV) based on a motion velocity range corresponding to the sensing object type information in a sensing requirement, with a certain redundancy taken into account. Moreover, the first device may set a value of MUR (that is, the target MUR) based on a range coverage corresponding to the coverage requirement information in the sensing requirement, with a certain redundancy taken into account.

Optionally, in a second implementation of this embodiment of this application, the first information includes the sensing prior information and the coverage requirement information, and the sensing prior information includes sensing velocity prior information. Step 202a may be specifically implemented by the following step 202a3 and step 202a4.

Step 202a3. The first device determines the target MUV based on the sensing velocity prior information.

Step 202a4. The first device determines the target MUR based on the coverage requirement information.

It can be understood that in an initial search stage, in a case that there is sensing velocity prior information but no sensing range prior information, the first device may set a value of MUV based on the sensing velocity prior information, with a certain redundancy taken into account. Moreover, the first device may set a value of MUR based on a range coverage corresponding to the coverage requirement information in the sensing requirement, with a certain redundancy taken into account.

Optionally, in a third implementation of this embodiment of this application, the first information includes the sensing prior information and the sensing object type information, and the sensing prior information includes sensing range prior information. Step 202a may be specifically implemented by the following step 202a5 and step 202a6.

Step 202a5. The first device determines the target MUV based on the sensing object type information.

Step 202a6. The first device determines the target MUR based on the sensing range prior information.

It can be understood that in an initial search stage, in a case that there is sensing range prior information but no sensing velocity prior information, the first device may set a value of MUV based on a motion velocity range corresponding to the sensing object type information in a sensing requirement, with a certain redundancy taken into account. Moreover, the first device may set a value of MUR based on the sensing range prior information, with a certain redundancy taken into account.

Optionally, in a fourth implementation of this embodiment of this application, the first information includes the sensing prior information, and the sensing prior information includes sensing velocity prior information and sensing range prior information. Step 202a may be specifically implemented by the following step 202a7 and step 202a8.

Step 202a7. The first device determines the target MUV based on the sensing velocity prior information.

Step 202a8. The first device determines the target MUR based on the sensing range prior information.

It can be understood that in an initial search stage, in a case that there is sensing velocity prior information and sensing range prior information, the first device may set a value of MUV based on the sensing velocity prior information, with a certain redundancy taken into account. Moreover, the first device may set a value of MUR based on the sensing range prior information, with a certain redundancy taken into account.

Optionally, in a fifth implementation of this embodiment of this application, the first information includes the motion parameter of the sensing object. Step 202a may be specifically implemented by the following step 202a9 and step 202a10.

Step 202a9. The first device determines the target MUV based on velocity information in the motion parameter of the sensing object.

Step 202a10. The first device determines the target MUR based on range information in the motion parameter of the sensing object.

It can be understood that in a tracking stage, the first device may set a value of MUV based on a real-time velocity of the sensing object, with a certain redundancy taken into account. Moreover, the first device may set a value of MUR based on a real-time range of the sensing object, with a certain redundancy taken into account.

Optionally, in this embodiment of this application, the real-time velocity of the sensing object may be any of the following: velocity measured for current sensing signal frame, and predicted value of velocity for next sensing signal frame using prediction method. The real-time range of the sensing object may be any of the following: range measured for current sensing signal frame, and predicted value of range for next sensing signal frame using prediction method.

It should be noted that the sensing signal frame includes multiple sensing signal period time lengths, and in radar detection, range and/or velocity and/or angle values of a set of targets are output at the end of signal processing for one sensing signal frame. Specific content of the prediction method is implementation content of a sensing node, which is not described in this embodiment of this application. The prediction method may be executed by a sensing node or a sensing function network element.

Step 202b. The first device determines, based on the target MUV and the target MUR, the target sensing signal period value from the sensing signal period parameter set.

Optionally, in this embodiment of this application, step 202b may be specifically implemented by the following step 202b1 and step 202b2.

Step 202b1. The first device determines a first constraint condition based on the target MUV, and determines a second constraint condition based on the target MUR.

Optionally, in this embodiment of this application, in a case that a velocity direction of the sensing object is unknown, the first constraint condition is that the sensing signal period value is less than or equal to $\dfrac{1}{2\left|v_{\max}\right|}$; or in a case that a velocity direction of the sensing object is known, the first constraint condition is that the sensing signal period value is less than or equal to $\dfrac{1}{\left|v_{\max}\right|}$. $v_{\max}$ is the target MUV

It should be noted that a velocity direction of the sensing object being unknown may be applicable to a case of being in an initial search stage and having no sensing velocity prior information. A velocity direction of the sensing object being known may be applicable to a case of being in an initial search stage and having sensing velocity prior information, or may be applicable to a case of being in a tracking stage.

Optionally, in this embodiment of this application, the second constraint condition is that the sensing signal period value is greater than or equal to $\dfrac{2R_{\max}}{c}$. $R_{\max}$ is the target MUR, and $c$ is the velocity of light.

Step 202b2. The first device determines, based on the first constraint condition and the second constraint condition, the target sensing signal period value from the sensing signal period parameter set.

Optionally, in this embodiment of this application, step 202b2 may be specifically implemented by the following step 202b21 or step 202b22.

Step 202b21. In a case that a sensing signal period value that satisfies both the first constraint condition and the second constraint condition is present in the sensing signal period parameter set, the first device determines the sensing signal period value, in the sensing signal period parameter set, that satisfies both the first constraint condition and the second constraint condition as the target sensing signal period value.

In this embodiment of this application, in a case that a sensing signal period T that satisfies $\dfrac{2R_{\max}}{c} \leq T \leq \dfrac{1}{2\left|v_{\max}\right|}$ is present, one sensing signal period value is selected from the sensing signal period value that satisfies the condition as the target sensing signal period value.

It should be noted that with reference to FIG. 4, a sensing signal period value that satisfies both the first constraint condition and the second constraint condition is present in the sensing signal period parameter set: values of MUV and MUR cannot both be large simultaneously, that is, either the value of MUV or the value of MUR takes a larger value; or values of MUV and MUR are both small.

Step 202b22. In a case that a sensing signal period value that satisfies both the first constraint condition and the second constraint condition is absent from the sensing signal period parameter set, the first device determines that the target sensing signal period value includes one of the following: two period values of coprime sensing signal period values in the sensing signal period parameter set, and one sensing signal period value, in the sensing signal period parameter set, that satisfies the first constraint condition or the second constraint condition.

It should be noted that with reference to FIG. 4, that a sensing signal period value that satisfies both the first constraint condition and the second constraint condition is absent from the sensing signal period parameter set can be understood as: values of MUV and MUR are both large.

Optionally, in this embodiment of this application, one of the two period values (the two period values of coprime sensing signal period values) satisfies the first constraint condition (that is, the MUV requirement), and the other of the two period values satisfies the second constraint condition (that is, the MUR requirement).

Optionally, in this embodiment of this application, the one sensing signal period value (a sensing signal period value that satisfies the first constraint condition or the second constraint condition) satisfies one of target constraint conditions, and a difference between the one sensing signal period value and a sensing signal period value required by the other of the target constraint conditions is less than or equal to a first preset threshold; The target constraint conditions include the first constraint condition and the second constraint condition.

Optionally, in this embodiment of this application, the one sensing signal period value satisfies one of target constraint conditions, a difference between the one sensing signal period value and a sensing signal period value required by the other of the target constraint conditions is less than or equal to a second preset threshold, and a motion parameter corresponding to the other constraint condition has prior information and/or a motion parameter value that satisfies a sensing requirement, where the motion parameter value is any one of the following: measured value of the motion parameter and predicted value of the motion parameter. The target constraint conditions include the first constraint condition and the second constraint condition.

It can be understood that in the following three scenarios, in a case that the first constraint condition and the second constraint condition cannot both be satisfied, one sensing signal period value may still be used.

In a tracking stage, in a case that a sensing signal period value can satisfy one of the first constraint condition and the second constraint condition and have a small deviation from the other one (that is, a difference between the sensing signal period value and a sensing signal period value required by the other constraint condition is less than or equal to the first preset threshold), the sensing signal period value can be used. For example, in a case that a sensing signal period T can satisfy the first constraint condition but cannot satisfy the second constraint condition, while kT can satisfy the second constraint condition, the sensing signal period T can be used. Alternatively, in a case that, a sensing signal period T can satisfy the second constraint condition but cannot satisfy the first constraint condition, while T/k can satisfy the first constraint condition, the sensing signal period T can be used. Herein, k is a value greater than 1 and less than or equal to 1.2.

In a tracking stage, in a case that a sensing signal period value can satisfy one of the first constraint condition and the second constraint condition, and the ambiguity of range and/or velocity measurement value brought about by using one sensing signal period can be eliminated by using a range and/or velocity prediction method. In this case, the sensing signal period value can be used.

In an initial search stage, there is relatively accurate sensing range prior information and/or sensing velocity prior information (that is, a motion parameter corresponding to a constraint condition has prior information that satisfies a sensing requirement). A sensing signal period value can satisfy one of the first constraint condition and second constraint condition and has a small deviation from the other constraint condition (that is, a difference between the sensing signal period value and a sensing signal period value required by the other constraint condition is less than or equal to the second preset threshold), and one of the first constraint condition and second constraint conditions that is not satisfied (that is, a motion parameter corresponding to the constraint condition unmet has prior information that satisfies a sensing requirement) has relatively accurate prior information. For example, in a case that a sensing signal period T can satisfy the first constraint condition but cannot satisfy the second constraint condition, while kT can satisfy the second constraint condition, and there is relatively accurate range prior information, the sensing signal period T can be used. Alternatively, in a case that a sensing signal period T can satisfy the second constraint condition but cannot satisfy the first constraint condition, while T/k can satisfy the first constraint condition, and there is relatively accurate velocity prior information, the sensing signal period T can be used.

It should be noted that for the motion parameter corresponding to the other constraint condition, in a case that the motion parameter corresponding to the first constraint condition is velocity, the motion parameter corresponding to the second constraint condition is range.

This embodiment of this application provides a method for determining sensing signal period. The first device may determine a sensing signal period value based on sensing prior information to be sensed, coverage requirement information to be sensed, sensing object type information to be sensed, and/or motion parameter of a sensing object, to adaptively adjust the sensing signal period value, so that sensing object detection performance of radar can satisfy a changing sensing requirement and/or motion parameter, and optimize time resource allocation for integrated sensing and communication.

Optionally, in this embodiment of this application, with reference to FIG. 2, as shown in FIG. 5, after step 202, the method for determining sensing signal period provided in this embodiment of this application further includes the following step 301.

Step 301. The first device determines, based on the target sensing signal period value, a target sensing waveform parameter from a sensing signal waveform parameter set.

In this embodiment of this application, the sensing signal waveform parameter set includes at least one sensing signal waveform parameter. The target sensing waveform parameter is used by the sensing node to generate a target sensing signal.

It should be noted that the sensing signal waveform parameter mentioned in this embodiment of this application is a parameter corresponding to a sensing signal period and used for generating a sensing signal. One group of sensing signal waveform parameters corresponds to one sensing signal waveform, and all sensing signal waveform parameters constitute a sensing signal waveform parameter set. The sensing signal waveform parameter mentioned in this embodiment of this application is a waveform parameter for a time dimension or strongly related to a time dimension.

Optionally, in this embodiment of this application, the sensing signal waveform parameter in the sensing signal waveform parameter set corresponds one-to-one with the sensing signal period values, or multiple groups of sensing signal waveform parameters correspond to one sensing signal period value in the sensing signal waveform parameter set.

Optionally, in this embodiment of this application, the sensing signal waveform parameter set includes at least one of the following: a sensing signal waveform parameter subset of a sensing-oriented signal, a sensing signal waveform parameter subset of a communication-oriented signal, and a sensing signal waveform parameter subset of an integrated sensing and communication signal.

Optionally, in this embodiment of this application, the sensing signal waveform parameter subset of the sensing-oriented signal includes at least one of the following: sensing signal period, pulse width, duty cycle, bandwidth and frequency slope, OFDM subcarrier spacing and subcarrier number, spread spectrum code sequence, and phase coding sequence.

It should be noted that the pulse width refers to a pulse time length of within one sensing signal period of a pulse waveform. The duty cycle refers to a ratio of a pulse time length to a sensing signal period within one sensing signal period of a pulse waveform. The bandwidth and frequency slope refer to a frequency modulation slope of an LFM signal or FMCW signal, measured in Hz/s.

Optionally, in this embodiment of this application, the sensing signal waveform parameter subset of the communication-oriented signal includes at least one of the following: configuration information of the communication-oriented signal, number of OFDM symbol periods included in sensing signal period, and offset of sensing signal period relative to subframe start position.

Optionally, in this embodiment of this application, the configuration information of communication-oriented signal includes OFDM subcarrier spacing configuration information and cyclic prefix (Cyclic Prefix, CP) configuration information.

Optionally, in this embodiment of this application, the number of OFDM symbol periods included in the sensing signal period may include the following two cases.

(1) All OFDM symbols from the first OFDM symbol of a sensing signal to the last OFDM symbol thereof are used for the sensing signal.
(2) Only some of OFDM symbols from the first OFDM symbol of a sensing signal to the last OFDM symbol thereof are used for the sensing signal.

It should be noted that the offset of sensing signal period relative to subframe start position is measured in OFDM symbol. Considering that a CP length of the first symbol of two 0.5 ms in a normal CP NR signal subframe is different from other symbols, in a case that the sensing signal periods include the same number of OFDM symbol periods but offsets relative to subframe start position are different, the sensing signal periods are different.

It should be noted that the sensing signal waveform parameter of integrated sensing and communication signal has some of the sensing-oriented signal waveform parameters and some of the communication-oriented signal waveform parameters.

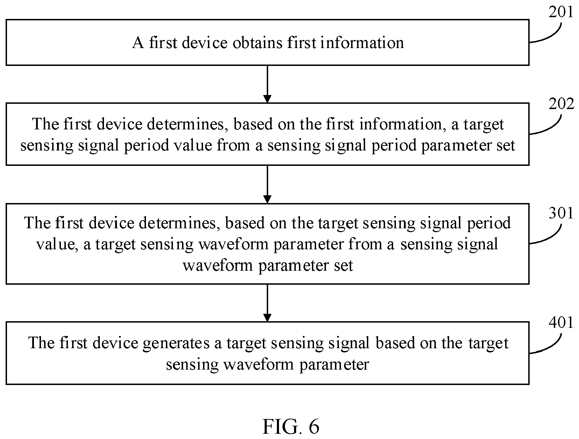

Optionally, in this embodiment of this application, with reference to FIG. 5, as shown in FIG. 6, after step 301, the method for determining sensing signal period provided in this embodiment of this application further includes the following step 401.

Step 401. The first device generates a target sensing signal based on the target sensing waveform parameter.

The first device in step 401 is a sensing node.

In this embodiment of this application, the target sensing signal is used by the sensing node to sense the sensing object.

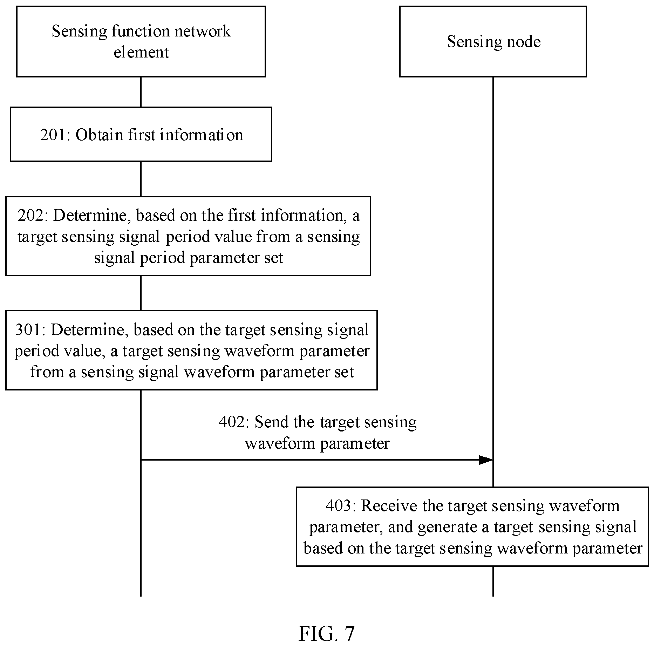

Optionally, in this embodiment of this application, with reference to FIG. 5, as shown in FIG. 7, after step 301, the method for determining sensing signal period provided in this embodiment of this application further includes the following steps 402 and 403.

Step 402. The first device sends the target sensing waveform parameter to a sensing node.

The first device in step 402 is a sensing function network element, and the target sensing waveform parameter is used by the sensing node to generate a target sensing signal.

Step 403. The sensing node receives the target sensing waveform parameter sent by the first device, and generates a target sensing signal based on the target sensing waveform parameter.

It can be understood that in a case that the first device is a sensing node, the sensing node may directly generate the target sensing signal based on the target sensing waveform parameter after determining the target sensing waveform parameter. Alternatively, in a case that the first device is a sensing function network element, the sensing function network element needs to send the target sensing waveform parameter to the sensing node after determining the target sensing waveform parameter, so that the sensing node generates the target sensing signal based on the target sensing waveform parameter received.

Optionally, in this embodiment of this application, after step 401 or step 403, the method for determining sensing signal period provided in this embodiment of this application further includes the following step 501.

Step 501. The first device sends the target sensing signal, and receives a target reflected echo signal to obtain target echo data.

In this embodiment of this application, the target echo data is used for determining the sensing result of the sensing object, and the first device in step 501 is a sensing node.

In this embodiment of this application, after generating the target sensing signal, the sensing node may perform the sensing process, that is, transmit the target sensing signal, and receive the target reflected echo signal, so as to analyze the data of the target reflected echo signal to obtain the target echo data, and then determine the sensing result of the sensing object based on the target echo data.

Optionally, in this embodiment of this application, the sensing node may transmit the target sensing signal and receive the target reflected echo signal in a self-transmit and self-receive mode.

Optionally, in this embodiment of this application, step 501 may be specifically implemented by the following step 501a and step 501b.

Step 501a. The first device obtains a target transmit waveform parameter and a target receive waveform parameter from the target sensing waveform parameter.

In this embodiment of this application, the target sensing waveform parameter includes at least one of the following: transmit waveform parameter, receive waveform parameter, and signal processing parameter.

Step 501b. The first device sends the target sensing signal by using the target transmit waveform parameter, and receives the target reflected echo signal by using the target receive waveform parameter, so as to obtain the target echo data.

Optionally, in this embodiment of this application, after step 501, the method for determining sensing signal period provided in this embodiment of this application further includes any one of the following steps 601 to 606.

Step 601. The first device performs radar signal processing on the target echo data to obtain the sensing result of the sensing object.

Step 602. The first device performs radar signal processing on the target echo data to obtain the sensing result of the sensing object, and sends the sensing result of the sensing object to a sensing function network element.

Step 603. The first device sends the target echo data to a sensing function network element, where the target echo data is used by the sensing function network element to perform radar signal processing so as to obtain the sensing result of the sensing object.

Step 604. The first device sends the target echo data to a sensing function network element, where the target echo data is used by the sensing function network element to perform radar signal processing so as to obtain the sensing result of the sensing object and send the sensing result of the sensing object to the first device.

Step 605. The first device performs partial calculation of radar signal processing on the target echo data to obtain an intermediate sensing result of the sensing object, and sends the intermediate sensing result to a sensing function network element, where the intermediate sensing result is used by the sensing function network element to perform remaining calculation of the radar signal processing so as to obtain the sensing result of the sensing object.

Step 606. The first device performs partial calculation of radar signal processing on the target echo data to obtain an intermediate sensing result of the sensing object, and sends the intermediate sensing result to a sensing function network element, where the intermediate sensing result is used by the sensing function network element to perform remaining calculation of the radar signal processing so as to obtain the sensing result of the sensing object and send the sensing result of the sensing object to the first device.

In this embodiment of this application, the first device may perform radar signal processing on the target echo data to obtain the sensing result of the sensing object, thereby realizing the sensing process of the sensing object.

The method for determining sensing signal period provided in this embodiment of this application and the sensing process are described below through specific implementation processes (that is, the initial search stage and tracking stage).

Step 1. In the initial search stage, a sensing function network element or sensing node sets values of MUV and MUR in radar detection based on a sensing requirement; selects, based on the set values of MUV and MUR and a sensing signal type supported by a sensing node, a sensing signal period value from a sensing signal period parameter set; and selects, based on the sensing signal period value, a sensing signal waveform parameter from a sensing signal waveform parameter set.

It should be noted that in a case that the process in step 1 is executed by a sensing function network element, a method for the sensing function network element to obtain the sensing signal type supported by the sensing node is one of the following options:

The sensing function network element reads information from itself or another accessible network node to obtain the sensing signal type supported by the sensing node.

The sensing function network element sends a message to the sensing node to instruct the sensing node to report the sensing signal type supported by the sensing node, so that the sensing node reports the sensing signal type supported by the sensing node to the sensing function network element.

The sensing signal period parameter set and the sensing signal waveform parameter set are pre-stored in the sensing function network element or the network node accessible by the sensing function network element, or pre-stored in the sensing node.

Step 2. The sensing node generates a target sensing signal based on the sensing signal waveform parameter, and the sensing node sends the target sensing signal, and receives a target reflected echo signal corresponding to the target sensing signal to obtain target echo data.

It should be noted that in a case that the process in step 1 is executed by the sensing function network element, before the sensing node generates the target sensing signal, the sensing node receives the sensing signal waveform parameter sent by the sensing function network element.

Optionally, in this embodiment of this application, the target sensing signal may be a sensing-oriented signal, a communication-oriented signal, or a communication-sensing integrated signal, which is specifically determined by the sensing signal type supported by the sensing node, and is consistent with a sensing signal type in the sensing signal waveform parameter received.

Step 3. After obtaining the target echo data, the sensing node may perform radar signal processing on the target echo data, or may send the target echo data to the sensing function network element for radar signal processing. The specific method may be any one of the following.

The sensing node performs radar signal processing on the target echo data to obtain the sensing result.

The sensing node performs radar signal processing on the target echo data to obtain the sensing result, and sends the sensing result to the sensing function network element.

The sensing node sends the target echo data to the sensing function network element, and the sensing function network element performs radar signal processing to obtain the sensing result.

The sensing node performs partial calculations of radar signal processing to obtain an intermediate sensing result, and sends the intermediate sensing result to the sensing function network element. The sensing function network element performs remaining calculation of the radar signal processing on the intermediate sensing result to obtain the sensing result.

Step 4. The sensing node and/or sensing function network element may repeatedly execute steps 1 to 3 until the sensing object is detected, and then enter the tracking stage, or the search fails and the sensing process ends.

It should be noted that the search failure refers to that finding no sensing object that matches the sensing requirement after a preset time length of searching.

Step 5. In the tracking stage, the sensing function network element or sensing node sets values of MUV and MUR in radar detection based on a motion parameter of the sensing objects; selects, based on the set values of MUV and MUR and the sensing signal type supported by the sensing node, a sensing signal period value from the sensing signal period parameter set to update the foregoing sensing signal period value; and selects, based on the sensing signal period value, a sensing signal waveform parameter from a sensing signal waveform parameter set to update the foregoing sensing signal waveform parameter.

It should be noted that in a case that the process in step 5 is executed by a sensing function network element, after the process in step 5 is completed, the sensing function network element sends to the sensing node the sensing signal waveform parameter updated.

Step 6. The sensing node adjusts, based on the sensing signal waveform parameter updated, configuration information corresponding to the target sensing signal, and the sensing node generates and sends the target sensing signal, and receives a target reflected echo signal of the target sensing signal, to obtain target echo data.

Optionally, in this embodiment of this application, the configuration information corresponding to the target sensing signal may include at least one of the following: a transmit waveform parameter of the target sensing signal, a receive waveform parameter of the target reflected echo signal corresponding to the target sensing signal, and a signal processing parameter of the target echo data.

It should be noted that in a case that the process in step 5 is executed by the sensing function network element, before the sensing node generates the target sensing signal, the sensing node receives the sensing signal waveform parameter updated.

Step 7. After the sensing node obtains the target echo data, reference may be made to step 3 for the radar signal processing process.

Step 8. The sensing node and/or sensing function network element may repeatedly execute steps 5 to 7 until the sensing process ends.

It should be noted that the method for determining sensing signal period provided in this embodiment of this application may also be performed by an apparatus for determining sensing signal period, or a control module configured to perform the method for determining sensing signal period in the apparatus for determining sensing signal period.

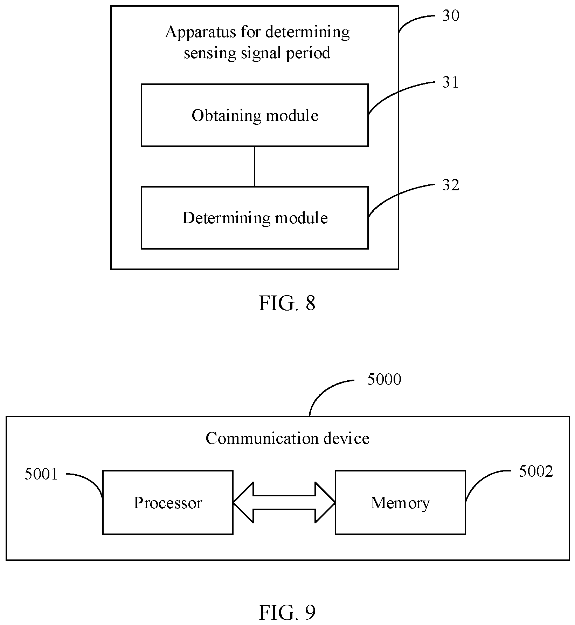

FIG. 8 is a possible schematic structural diagram of an apparatus for determining sensing signal period according to an embodiment of this application. As shown in FIG. 8, the apparatus 30 for determining sensing signal period may include an obtaining module 31 and a determining module 32.

The obtaining module 31 is configured to obtain first information, where the first information includes at least one of the following: sensing prior information, coverage requirement information, sensing object type information, and motion parameter of a sensing object. The determining module 32 is configured to determine, based on the first information obtained by the obtaining module 31, a target sensing signal period value from a sensing signal period parameter set, where the sensing signal period parameter set includes at least one sensing signal period value. The sensing prior information is used to indicate a motion parameter range of the sensing object, the coverage requirement information is used to indicate a range coverage of the sensing object, and the sensing object type information is used to indicate a velocity range of the sensing object.

An embodiment of this application provides an apparatus for determining sensing signal period. The apparatus for determining sensing signal period may determine a sensing signal period value based on sensing prior information to be sensed, coverage requirement information to be sensed, sensing object type information to be sensed, and/or motion parameter of a sensing object, to adaptively adjust the sensing signal period value, so that sensing object detection performance of radar can satisfy a changing sensing requirement and/or motion parameter, and optimize time resource allocation for integrated sensing and communication.

In a possible implementation, the sensing prior information includes at least one of the following: sensing velocity prior information and sensing range prior information; the coverage requirement information is determined by at least one of the following: regional range of sensing object, location information of sensing node, and range coverage capability of sensing node; or the motion parameter of the sensing object include at least one of the following: range information, velocity information, and motion direction, where the motion direction is the sensing object approaching the sensing node or the sensing object leaving the sensing node.

In a possible implementation, the obtaining module 31 is specifically configured to: receive the first information, where the first information includes at least one of the following: the sensing prior information, the coverage requirement information, the sensing object type information, and the motion parameter of the sensing object; or process a radar signal to obtain the first information, where the first information includes the motion parameter of the sensing object.

In a possible implementation, the determining module 32 is specifically configured to: determine a target MUV and a target MUR based on the first information; and determine, based on the target MUV and the target MUR, the target sensing signal period value from the sensing signal period parameter set.

In a possible implementation, the first information includes the coverage requirement information and the sensing object type information; and the determining module 32 is specifically configured to determine the target MUV based on the sensing object type information and determine the target MUR based on the coverage requirement information.

In a possible implementation, the first information includes the sensing prior information and the coverage requirement information, and the sensing prior information includes sensing velocity prior information; and the determining module 32 is specifically configured to determine the target MUV based on the sensing velocity prior information and determine the target MUR based on the coverage requirement information.

In a possible implementation, the first information includes the sensing prior information and the sensing object type information, and the sensing prior information includes sensing range prior information; and the determining module 32 is specifically configured to determine the target MUV based on the sensing object type information and determine the target MUR based on the sensing range prior information.

In a possible implementation, the first information includes the sensing prior information, and the sensing prior information includes sensing velocity prior information and sensing range prior information; and the determining module 32 is specifically configured to determine the target MUV based on the sensing velocity prior information and determine the target MUR based on the sensing range prior information.

In a possible implementation, the first information includes the motion parameter of the sensing object; and the determining module 32 is specifically configured to determine the target MUV based on velocity information in the motion parameter of the sensing object and determine the target MUR based on range information in the motion parameter of the sensing object.

In a possible implementation, the determining module 32 is specifically configured to: determine a first constraint condition based on the target MUV and determine a second constraint condition based on the target MUR; and determine, based on the first constraint condition and the second constraint condition, the target sensing signal period value from the sensing signal period parameter set.

In a possible implementation, in a case that a velocity direction of the sensing object is unknown, the first constraint condition is that the sensing signal period value is less than or equal to $\dfrac{1}{2|v_{\max}|}$ ; or in a case that a velocity direction of the sensing object is known, the first constraint condition is that the sensing signal period value is less than or equal to $\dfrac{1}{|v_{\max}|}$ ; and

the second constraint condition is that the sensing signal period value is greater than or equal to $\dfrac{2R_{\max}}{c}$ ; where

$v_{\max}$ is the target MUV, $R_{\max}$ is the target MUR, and c is the velocity of light.

In a possible implementation, the determining module 32 is specifically configured to: in a case that a sensing signal period value that satisfies both the first constraint condition and the second constraint condition is present in the sensing signal period parameter set, determine the sensing signal period value, in the sensing signal period parameter set, that satisfies both the first constraint condition and the second constraint condition as the target sensing signal period value; or in a case that a sensing signal period value that satisfies both the first constraint condition and the second constraint condition is absent from the sensing signal period parameter set, determine that the target sensing signal period value includes one of the following: two period values of coprime sensing signal period values in the sensing signal period parameter set, and one sensing signal period value, in the sensing signal period parameter set, that satisfies the first constraint condition or the second constraint condition.

In a possible implementation, one of the two period values satisfies the first constraint condition, and the other of the two period values satisfies the second constraint condition.

In a possible implementation, the one sensing signal period value satisfies one of target constraint conditions, and a difference between the one sensing signal period value and a sensing signal period value required by the other of the target constraint conditions is less than or equal to a first preset threshold; or the one sensing signal period value satisfies one of target constraint conditions, a difference between the one sensing signal period value and a sensing signal period value required by the other of the target constraint conditions is less than or equal to a second preset threshold, and a motion parameter corresponding to the other constraint condition has prior information and/or a motion parameter value that satisfies a sensing requirement, where the motion parameter value is any one of the following: measured value of the motion parameter and predicted value of the motion parameter. The target constraint conditions include the first constraint condition and the second constraint condition.

In a possible implementation, the sensing signal period parameter set includes at least one of the following: a sensing signal period parameter subset of a sensing-oriented signal, a sensing signal period parameter subset of a communication-oriented signal, and a sensing signal period parameter subset of an integrated sensing and communication signal; where

a period value of the sensing-oriented signal is a period value in the sensing signal period parameter subset of the sensing-oriented signal that satisfies a preset MUV requirement and/or preset MUR requirement; and
a period value of the communication-oriented signal includes any one of the following: a sum of any integer number of symbol periods corresponding to the communication-oriented signal; and any combination of synchronization signal period value and/or reference signal time domain interval.

In a possible implementation, the sensing signal period parameter set includes at least two first sensing signal period subsets, each first sensing signal period subset corresponds to one type of motion mode, each first sensing signal period subset includes at least one sensing signal period value, the sensing signal period values included in the at least two first sensing signal period subsets are different, and the sensing signal period values included in the at least two first sensing signal period subsets either intersect or do not intersect.

In a possible implementation, the sensing signal period parameter set has at least one of the following characteristics: the sensing signal period parameter set includes multiple different sensing signal period values; a first part of sensing signal period values in the sensing signal period parameter set satisfies a preset maximum sensing object range requirement, and a second part of the sensing signal period values in the sensing signal period parameter set satisfies a preset maximum sensing object velocity requirement; and at least two coprime sensing signal period values are present in the sensing signal period parameter set.

In a possible implementation, a target part of the sensing signal period values in the sensing signal period parameter set satisfies both the preset maximum sensing object range requirement and the preset maximum sensing object velocity requirement, and the target part of the sensing signal period values includes at least one of the following: some of the first part of the sensing signal period values, and some of the second part of the sensing signal period values.

In a possible implementation, after determining, based on the first information, the target sensing signal period value from the sensing signal period parameter set, the determining module 32 is further configured to determine, based on the target sensing signal period value, a target sensing waveform parameter from a sensing signal waveform parameter set, where the sensing signal waveform parameter set includes at least one sensing signal waveform parameter.

In a possible implementation, the apparatus 30 for determining sensing signal period provided in this embodiment of this application further includes a generating module. The generating module is configured to: after the determining module 32 determines, based on the target sensing signal period value, the target sensing waveform parameter from the sensing signal waveform parameter set, generate a target sensing signal based on the target sensing waveform parameter, where the first device is a sensing node. Alternatively, the apparatus 30 for determining sensing signal period provided in this embodiment of this application further includes a sending module. The sending module is configured to: after the determining module 32 determines, based on the target sensing signal period value, the target sensing waveform parameter from the sensing signal waveform parameter set, send the target sensing waveform parameter to a sensing node, where the first device is a sensing function network element, and the target sensing waveform parameter is used by the sensing node to generate a target sensing signal. The target sensing signal is used by the sensing node to sense the sensing object.

In a possible implementation, the apparatus 30 for determining sensing signal period provided in this embodiment of this application further includes a sending module and a receiving module. The sending module is configured to: after the sensing node generating the target sensing signal, send the target sensing signal. The receiving module is configured to receive a target reflected echo signal to obtain target echo data, where the target echo data is used for determining a sensing result of the sensing object, and the first device is the sensing node.

In a possible implementation, the sending module is specifically configured to: obtain a target transmit waveform parameter and a target receive waveform parameter from the target sensing waveform parameter; and send the target sensing signal by using the target transmit waveform parameter. The receiving module is specifically configured to receive the target reflected echo signal by using the target receive waveform parameter, so as to obtain the target echo data.

In a possible implementation, the apparatus 30 for determining sensing signal period provided in this embodiment of this application further includes a processing module. The processing module is configured to: after the receiving module receives the target reflected echo signal, perform radar signal processing on the target echo data to obtain the sensing result of the sensing object; perform radar signal processing on the target echo data to obtain the sensing result of the sensing object, and send the sensing result of the sensing object to a sensing function network element; send the target echo data to a sensing function network element, where the target echo data is used by the sensing function network element to perform radar signal processing so as to obtain the sensing result of the sensing object; send the target echo data to a sensing function network element, where the target echo data is used by the sensing function network element to perform radar signal processing so as to obtain the sensing result of the sensing object and send the sensing result of the sensing object to the first device; perform partial calculation of radar signal processing on the target echo data to obtain an intermediate sensing result of the sensing object, and send the intermediate sensing result to a sensing function network element, where the intermediate sensing result is used by the sensing function network element to perform remaining calculation of the radar signal processing so as to obtain the sensing result of the sensing object; or perform partial calculation of radar signal processing on the target echo data to obtain an intermediate sensing result of the sensing object, and send the intermediate sensing result to a sensing function network element, where the intermediate sensing result is used by the sensing function network element to perform remaining calculation of the radar signal processing so as to obtain the sensing result of the sensing object and send the sensing result of the sensing object to the first device.

In a possible implementation, the sensing signal waveform parameter set includes at least one of the following: a sensing signal waveform parameter subset of a sensing-oriented signal, a sensing signal waveform parameter subset of a communication-oriented signal, and a sensing signal waveform parameter subset of an integrated sensing and communication signal.

The sensing signal waveform parameter subset of the sensing-oriented signal includes at least one of the following: sensing signal period, pulse width, duty cycle, bandwidth and frequency slope, OFDM subcarrier spacing and subcarrier number, spread spectrum code sequence, and phase coding sequence.

The sensing signal waveform parameter subset of the communication-oriented signal includes at least one of the following: configuration information of the communication-oriented signal, number of OFDM symbol periods included in sensing signal period, and offset of sensing signal period relative to subframe start position.

The apparatus for determining sensing signal period provided in this embodiment of this application can implement the processes implemented by the first device in the foregoing method embodiment, with the same technical effects achieved. To avoid repetition, details are not described herein again.

The apparatus for determining sensing signal period provided in this embodiment of this application may be a sensing function network element or a sensing node (for example, UE) for example, UE having an operating system, or may be a component of UE, for example, an integrated circuit or a chip. The UE may be a terminal or another device than a terminal. For example, the UE may include but is not limited to the types of the UE 11 listed above, and the another device may be servers, network attached storage (Network Attached Storage, NAS), or the like. This is not specifically limited in the embodiments of this application.

Optionally, as shown in FIG. 9, an embodiment of this application further provides a communication device 5000 including a processor 5001 and a memory 5002. The memory 5002 stores a program or instructions executable on the processor 5001. For example, if the communication device 5000 is a sensing node or a sensing function network element, when the program or the instructions are executed by the processor 5001, the steps of the foregoing method embodiment on the first device side are implemented, with the same technical effects achieved. To avoid repetition, details are not described herein again.

It should be noted that the sensing node in this embodiment of this application may be a base station, UE, a TRP, a RIS, an AP, or the like. The sensing node being UE or a base station is used as an example herein to describe a hardware structure of the sensing node.

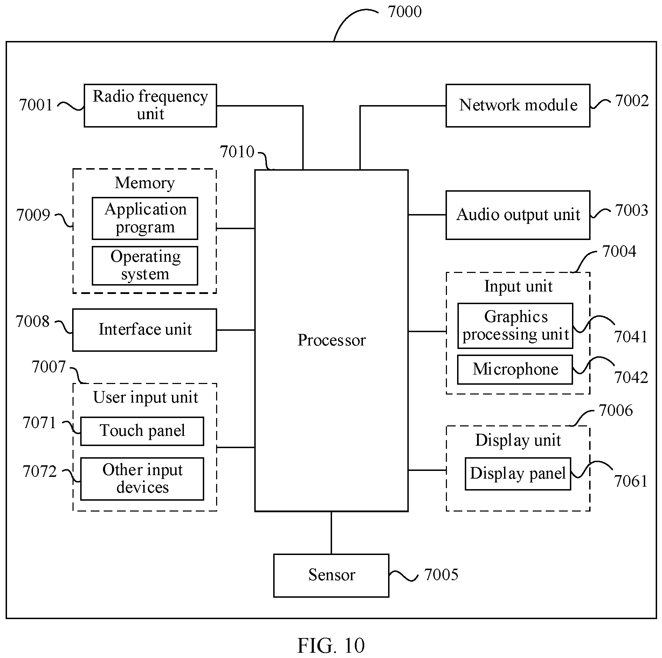

An embodiment of this application further provides UE including a processor and a communication interface. The processor is configured to: obtain first information, where the first information includes at least one of the following: sensing prior information, coverage requirement information, sensing object type information, and motion parameter of a sensing object; and determine, based on the first information, a target sensing signal period value from a sensing signal period parameter set, where the sensing signal period parameter set includes at least one sensing signal period value; where the sensing prior information is used to indicate a motion parameter range of the sensing object, the coverage requirement information is used to indicate a range coverage of the sensing object, and the sensing object type information is used to indicate a velocity range of the sensing object. This UE embodiment corresponds to the foregoing sensing node-side method embodiment. All processes and implementations in the foregoing method embodiment can be applicable to this UE station embodiment, with the same technical effects achieved. Specifically, FIG. 10 is a schematic diagram of a hardware structure of UE according to an embodiment of this application.

The UE 7000 includes but is not limited to at least part of these components: a radio frequency unit 7001, a network module 7002, an audio output unit 7003, an input unit 7004, a sensor 7005, a display unit 7006, a user input unit 7007, an interface unit 7008, a memory 7009, a processor 7010, and the like.

It can be understood by those skilled in the art that the UE 7000 may further include a power supply (for example, battery) supplying power to the components. The power supply may be logically connected to the processor 7010 via a power management system, so that functions such as charge management, discharge management, and power consumption management are implemented via the power management system. The structure of the UE shown in FIG. 10 does not constitute a limitation on the UE. The UE may include more or fewer components than shown in the figure, or some components are combined, or component arrangements are different. Details are not described herein.

It should be understood that the input unit 7004 may include a graphics processing unit (Graphics Processing Unit, GPU) 7041 and a microphone 7042. The graphics processing unit 7041 processes image data of still pictures or videos that are obtained by an image capture apparatus (for example, camera) in an image or video capture mode. The display unit 7006 may include a display panel 7061. The display panel 7061 may be configured in a form of a liquid crystal display, an organic light-emitting diode display, or the like. The user input unit 7007 includes at least one of a touch panel 7071 and other input devices 7072. The touch panel 7071 is also referred to as a touchscreen. The touch panel 7071 may include two parts: a touch detection apparatus and a touch controller. Specifically, the other input devices 7072 may include but are not limited to a physical keyboard, a function button (for example, volume control button or on/off button), a trackball, a mouse, and a joystick. Details are not described herein.

In an embodiment of this application, the radio frequency unit 7001 receives downlink data from a network-side device and transfers the data to the processor 7010 for processing; and the radio frequency unit 7001 can additionally send uplink data to the network-side device. Generally, the radio frequency unit 7001 includes but is not limited to an antenna, an amplifier, a transceiver, a coupler, a low noise amplifier, a duplexer, and the like.

The memory 7009 may be configured to store software programs or instructions and various data. The memory 7009 may include a first storage area for storing programs or instructions and a second storage area for storing data. The first storage area may store an operating system, an application program or instructions required by at least one function (for example, a sound playback function or an image playback function), and the like. In addition, the memory 7009 may include a volatile memory or a non-volatile memory, or the memory 7009 may include a volatile memory and a non-volatile memory. The non-volatile memory may be a read-only memory (Read-Only Memory, ROM), a programmable read-only memory (Programmable ROM, PROM), an erasable programmable read-only memory (Erasable PROM, EPROM), an electrically erasable programmable read-only memory (Electrically EPROM, EEPROM), or a flash memory. The volatile memory may be a random access memory (Random Access Memory, RAM), a static random access memory (Static RAM, SRAM), a dynamic random access memory (Dynamic RAM, DRAM), a synchronous dynamic random access memory (Synchronous DRAM, SDRAM), a double data rate synchronous dynamic random access memory (Double Data Rate SDRAM, DDRSDRAM), an enhanced synchronous dynamic random access memory (Enhanced SDRAM, ESDRAM), a synchronous link dynamic random access memory (Synch link DRAM, SLDRAM), and a direct rambus random access memory (Direct Rambus RAM, DRRAM). The memory 709 of the embodiments of this application includes but is not be limited to these and any other applicable types of memories.

The processor 7010 may include one or more processing units. Optionally, the processor 7010 may integrate an application processor and a modem processor. The application processor primarily processes operations involving an operating system, user interface, application program, or the like. The modem processor primarily processes radio communication signals, for example, being a baseband processor. It can be understood that the modem processor may alternatively be not integrated in the processor 7010.

The processor 7010 is configured to: obtain first information, where the first information includes at least one of the following: sensing prior information, coverage requirement information, sensing object type information, and motion parameter of a sensing object; and determine, based on the first information, a target sensing signal period value from a sensing signal period parameter set, where the sensing signal period parameter set includes at least one sensing signal period value; where the sensing prior information is used to indicate a motion parameter range of the sensing object, the coverage requirement information is used to indicate a range coverage of the sensing object, and the sensing object type information is used to indicate a velocity range of the sensing object.

An embodiment of this application provides UE. The UE may determine a sensing signal period value based on sensing prior information to be sensed, coverage requirement information to be sensed, sensing object type information to be sensed, and/or motion parameter of a sensing object, to adaptively adjust the sensing signal period value, so that sensing object detection performance of radar can satisfy a changing sensing requirement and/or motion parameter, and optimize time resource allocation for integrated sensing and communication.

The UE provided in this embodiment of this application can implement the processes implemented by the sensing node in the foregoing method embodiment, with the same technical effects achieved. To avoid repetition, details are not repeated herein.

An embodiment of this application further provides a base station including a processor and a communication interface. The processor is configured to: obtain first information, where the first information includes at least one of the following: sensing prior information, coverage requirement information, sensing object type information, and motion parameter of a sensing object; and determine, based on the first information, a target sensing signal period value from a sensing signal period parameter set; where the sensing prior information is used to indicate a motion parameter range of the sensing object, the coverage requirement information is used to indicate a range coverage of the sensing object, and the sensing object type information is used to indicate a velocity range of the sensing object. This base station embodiment corresponds to the foregoing sensing node method embodiment. All processes and implementations in the foregoing method embodiment can be applicable to this base station embodiment, with the same technical effects achieved.

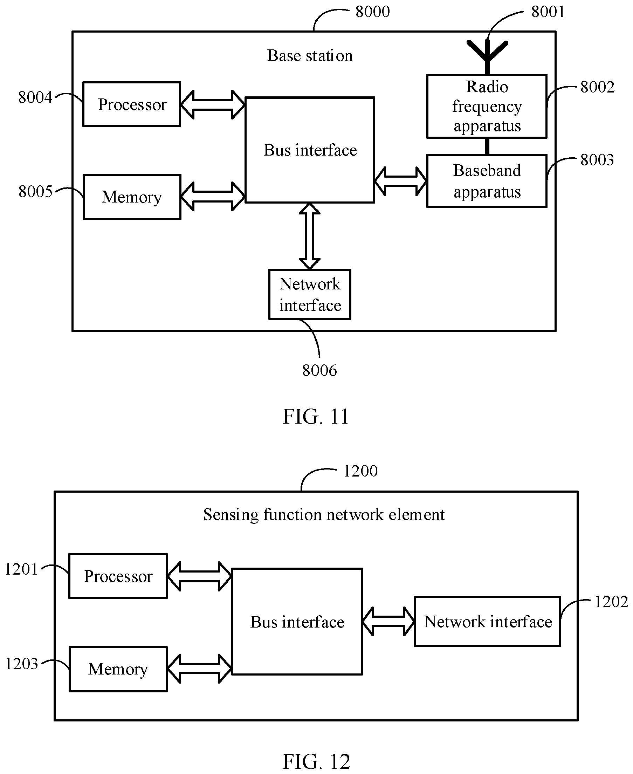

Specifically, an embodiment of this application further provides a base station. As shown in FIG. 11, the base station 8000 includes an antenna 8001, a radio frequency apparatus 8002, and a baseband apparatus 8003, a processor 8004, and a memory 8005. The antenna 8001 is connected to the radio frequency apparatus 8002. Uplink, the radio frequency apparatus 8002 receives information through the antenna 8001, and sends the received information to the baseband apparatus 8003 for processing. Downlink, the baseband apparatus 8003 processes to-be-sent information, and sends the information to the radio frequency apparatus 8002; and the radio frequency apparatus 8002 processes the received information and then sends the information out through the antenna 8001.

The method executed by the sensing node in the foregoing embodiments may be implemented on the baseband apparatus 8003. The baseband apparatus 8003 includes a baseband processor.

The baseband apparatus 8003 may include, for example, at least one baseband board, where a plurality of chips are disposed on the baseband board. As shown in FIG. 11, one of the chips is, for example, a baseband processor, and connected to the memory 8005 through a bus interface, to invoke the program in the memory 8005 to perform the operations of the sensing node shown in the foregoing method embodiment.

The base station may further include a network interface 8006. The interface is, for example, a common public radio interface (Common Public Radio Interface, CPRI).

Specifically, the base station 8000 in this embodiment of the present invention further includes an instruction or program stored in the memory 8005 and executable on the processor 8004. The processor 8004 invokes the instruction or program in the memory 8005 to execute the method executed by the modules, with the same technical effects achieved. To avoid repetition, details are not described herein again.

An embodiment of this application further provides a sensing function network element. As shown in FIG. 12, the sensing function network element 1200 includes a processor 1201, a network interface 1202, and a memory 1203. The network interface 1202 is, for example, a common public radio interface (Common Public Radio Interface, CPRI).

Specifically, the sensing function network element 1200 in this embodiment of the present invention further includes an instruction or a program stored in the memory 1203 and executable on the processor 1201. The processor 1201 invokes the instruction or the program in the memory 1203 to perform the method performed by the foregoing modules, with the same technical effects achieved. To avoid repetition, details are not described herein again.

An embodiment of this application further provides a readable storage medium. The readable storage medium stores a program or instructions, and when the program or instructions are executed by a processor, the processes of the foregoing method embodiments are implemented, with the same technical effects achieved. To avoid repetition, details are not described herein again.

The processor is the processor in the communication device in the foregoing embodiment. The readable storage medium includes a computer-readable storage medium such as a computer read-only memory ROM, a random access memory RAM, a magnetic disk, or an optical disc.

An embodiment of this application further provides a chip. The chip includes a processor and a communication interface, the communication interface is coupled to the processor, and the processor is configured to run a program or instructions to implement the processes of the foregoing method embodiments, with the same technical effects achieved. To avoid repetition, details are not described herein again.

It should be understood that the chip mentioned in this embodiment of this application may also be referred to as a system-level chip, a system chip, a chip system, a system-on-chip, or the like.

An embodiment of this application further provides a computer program/program product, where the computer program/program product is stored in a storage medium, and the computer program/program product is executed by at least one processor to implement the processes of the foregoing method embodiments, with the same technical effects achieved. To avoid repetition, details are not described herein again.

It should be noted that in this specification, the terms "include", "comprise", or any of their variants are intended to cover a non-exclusive inclusion, so that a process, a method, an article, or an apparatus that includes a series of elements not only includes those elements but also includes other elements that are not expressly listed, or further includes elements inherent to such a process, method, article, or apparatus. Without more constraints, an element preceded by "includes a..." does not preclude the presence of other identical elements in the process, method, article, or apparatus that includes the element. In addition, it should be noted that the scope of the method and apparatus in the implementations of this application is not limited to functions being performed in the order shown or discussed, but may further include functions being performed at substantially the same time or in a reverse order, depending on the functions involved. For example, the described method may be performed in an order different from the order described, and steps may be added, omitted, or combined. In addition, features described with reference to some examples may be combined in other examples.

Based on the above description of embodiments, persons skilled in the art can clearly understand that the method in the foregoing embodiments can be implemented through software on a necessary hardware platform or certainly through hardware only, but in many cases, the former is the more preferred implementation. Based on such an understanding, the technical solutions of this application essentially, or the part contributing to the prior art may be implemented in a form of a computer software product. The computer software product is stored in a storage medium (for example, a ROM/RAM, a magnetic disk, or an optical disc), and includes several instructions for instructing a terminal (which may be a mobile phone, a computer, a server, an air conditioner, a network device, or the like) to perform the method described in the embodiments of this application.

The foregoing describes the embodiments of this application with reference to the accompanying drawings. However, this application is not limited to the foregoing specific embodiments. The foregoing specific embodiments are merely illustrative rather than restrictive. As instructed by this application, persons of ordinary skill in the art may develop many other manners without departing from principles of this application and the protection scope of the claims, and all such manners fall within the protection scope of this application.

**Claims**

1. A method for determining sensing signal period, wherein the method comprises:

obtaining, by a first device, first information, wherein the first information comprises at least one of the following:

sensing prior information, coverage requirement information, sensing object type information, and motion parameter of a sensing object; and

determining, by the first device based on the first information, a target sensing signal period value from a sensing signal period parameter set, wherein the sensing signal period parameter set comprises at least one sensing signal period value; wherein

the sensing prior information is used to indicate a motion parameter range of the sensing object, the coverage requirement information is used to indicate a range coverage of the sensing object, and the sensing object type information is used to indicate a velocity range of the sensing object.

2. The method according to claim 1, wherein the sensing prior information comprises at least one of the following: sensing velocity prior information and sensing range prior information;

the coverage requirement information is determined by at least one of the following: regional range of the sensing object, location information of a sensing node, and range coverage capability of the sensing node; or

the motion parameter of the sensing object comprises at least one of the following: range information, velocity information, and motion direction, wherein the motion direction is the sensing object approaching the sensing node or the sensing object leaving the sensing node.

3. The method according to claim 1, wherein the obtaining, by a first device, first information comprises:

receiving, by the first device, the first information, wherein the first information comprises at least one of the following: the sensing prior information, the coverage requirement information, the sensing object type information, and the motion parameter of the sensing object; or

processing, by the first device, a radar signal to obtain the first information, wherein the first information comprises the motion parameter of the sensing object.

4. The method according to any one of claims 1 to 3, wherein the determining, by the first device based on the first information, a target sensing signal period value from a sensing signal period parameter set comprises:

determining, by the first device, a target maximum unambiguous velocity MUV and a target maximum unambiguous range MUR based on the first information; and

determining, by the first device based on the target MUV and the target MUR, the target sensing signal period value from the sensing signal period parameter set.

5. The method according to claim 4, wherein the first information comprises the coverage requirement information and the sensing object type information; and

the determining, by the first device, a target MUV and a target MUR based on the first information comprises:

determining, by the first device, the target MUV based on the sensing object type information, and
determining, by the first device, the target MUR based on the coverage requirement information.

6. The method according to claim 4, wherein the first information comprises the sensing prior information and the coverage requirement information, and the sensing prior information comprises sensing velocity prior information; and

the determining, by the first device, a target MUV and a target MUR based on the first information comprises:

determining, by the first device, the target MUV based on the sensing velocity prior information, and
determining, by the first device, the target MUR based on the coverage requirement information.

7. The method according to claim 4, wherein the first information comprises the sensing prior information and the sensing object type information, and the sensing prior information comprises sensing range prior information; and
the determining, by the first device, a target MUV and a target MUR based on the first information comprises:

determining, by the first device, the target MUV based on the sensing object type information, and
determining, by the first device, the target MUR based on the sensing range prior information.

8. The method according to claim 4, wherein the first information comprises the sensing prior information, and the sensing prior information comprises sensing velocity prior information and sensing range prior information; and

the determining, by the first device, a target MUV and a target MUR based on the first information comprises:

determining, by the first device, the target MUV based on the sensing velocity prior information, and
determining, by the first device, the target MUR based on the sensing range prior information.

9. The method according to claim 4, wherein the first information comprises the motion parameter of the sensing object; and
the determining, by the first device, a target MUV and a target MUR based on the first information comprises:

determining, by the first device, the target MUV based on velocity information in the motion parameter of the sensing object, and
determining, by the first device, the target MUR based on range information in the motion parameter of the sensing object.

10. The method according to claim 4, wherein the determining, by the first device based on the target MUV and the target MUR, the target sensing signal period value from the sensing signal period parameter set comprises:

determining, by the first device, a first constraint condition based on the target MUV, and determining a second constraint condition based on the target MUR, and
determining, by the first device based on the first constraint condition and the second constraint condition, the target sensing signal period value from the sensing signal period parameter set.

11. The method according to claim 10, wherein in a case that a velocity direction of the sensing object is unknown, the first constraint condition is that a sensing signal period value is less than or equal to $\dfrac{1}{2\left|v_{\max}\right|}$ ; or

in a case that a velocity direction of the sensing object is known, the first constraint condition is that the sensing signal period value is less than or equal to $\dfrac{1}{\left|v_{\max}\right|}$ ; and

the second constraint condition is that the sensing signal period value is greater than or equal to $\dfrac{2R_{\max}}{c}$ ;
wherein
$v_{\max}$ is the target MUV, $R_{\max}$ is the target MUR, and c is velocity of light.

12. The method according to claim 10 or 11, wherein the determining, by the first device based on the first constraint condition and the second constraint condition, the target sensing signal period value from the sensing signal period parameter set comprises:

in a case that a sensing signal period value that satisfies both the first constraint condition and the second constraint condition is present in the sensing signal period parameter set, determining, by the first device, the sensing signal period value, in the sensing signal period parameter set, that satisfies both the first constraint condition and the second constraint condition as the target sensing signal period value; or
in a case that a sensing signal period value that satisfies both the first constraint condition and the second constraint condition is absent from the sensing signal period parameter set, determining, by the first device, that the target sensing signal period value comprises one of the following: two period values of coprime sensing signal period values in the sensing signal period parameter set, and one sensing signal period value, in the sensing signal period parameter set, that satisfies the first constraint condition or the second constraint condition.

13. The method according to claim 12, wherein one of the two period values satisfies the first constraint condition, and an other of the two period values satisfies the second constraint condition.

14. The method according to claim 12, wherein the one sensing signal period value satisfies one of target constraint conditions, and a difference between the one sensing signal period value and a sensing signal period value required by an other of the target constraint conditions is less than or equal to a first preset threshold; or

the one sensing signal period value satisfies one of target constraint conditions, the difference between the one sensing signal period value and the sensing signal period value required by the other of the target constraint conditions is less than or equal to a second preset threshold, and a motion parameter corresponding to the other constraint condition has prior information and/or a motion parameter value that satisfies a sensing requirement, wherein the motion parameter value is any one of the following: measured value of the motion parameter and predicted value of the motion parameter; wherein

the target constraint conditions comprise the first constraint condition and the second constraint condition.

15. The method according to claim 1, wherein the sensing signal period parameter set comprises at least one of the following: a sensing signal period parameter subset of a sensing-oriented signal, a sensing signal period parameter subset of a communication-oriented signal, and a sensing signal period parameter subset of an integrated sensing and communication signal; wherein

a period value of the sensing-oriented signal is a period value, in the sensing signal period parameter subset of the sensing-oriented signal, that satisfies a preset MUV requirement and/or preset MUR requirement; and a period value of the communication-oriented signal comprises any one of the following: a sum of any integer number of symbol periods corresponding to the communication-oriented signal, and any combination of synchronization signal period value and/or reference signal time domain interval.

16. The method according to claim 1 or 15, wherein the sensing signal period parameter set comprises at least two first sensing signal period subsets, each first sensing signal period subset corresponds to one type of motion mode, each first sensing signal period subset comprises at least one sensing signal period value, the sensing signal period values comprised in the at least two first sensing signal period subsets are different, and the sensing signal period values comprised in the at least two first sensing signal period subsets either intersect or do not intersect.

17. The method according to claim 1 or 15, wherein the sensing signal period parameter set has at least one of the following characteristics:

the sensing signal period parameter set comprises multiple different sensing signal period values; a first part of sensing signal period values in the sensing signal period parameter set satisfies a preset maximum sensing object range requirement, and a second part of the sensing signal period values in the sensing signal period parameter set satisfies a preset maximum sensing object velocity requirement; and at least two coprime sensing signal period values are present in the sensing signal period parameter set.

18. The method according to claim 17, wherein a target part of the sensing signal period values in the sensing signal period parameter set satisfies both the preset maximum sensing object range requirement and the preset maximum sensing object velocity requirement, and the target part of the sensing signal period values comprises at least one of the following: some of the first part of the sensing signal period values, and some of the second part of the sensing signal period values.

19. The method according to claim 1, wherein after the determining, by the first device based on the first information, a target sensing signal period value from a sensing signal period parameter set, the method further comprises: determining, by the first device based on the target sensing signal period value, a target sensing waveform parameter from a sensing signal waveform parameter set, wherein the sensing signal waveform parameter set comprises at least one sensing signal waveform parameter.

20. The method according to claim 19, wherein after the determining, by the first device based on the target sensing signal period value, a target sensing waveform parameter from a sensing signal waveform parameter set, the method further comprises:

generating, by the first device, a target sensing signal based on the target sensing waveform parameter, wherein the first device is a sensing node; or sending, by the first device, the target sensing waveform parameter to a sensing node, wherein the first device is a sensing function network element, and the target sensing waveform parameter is used by the sensing node to generate a target sensing signal; wherein the target sensing signal is used by the sensing node to sense the sensing object.

**21.** The method according to claim 20, wherein after the sensing node generating the target sensing signal, the method further comprises:
sending, by the first device, the target sensing signal, and receiving a target reflected echo signal to obtain target echo data, wherein the target echo data is used for determining a sensing result of the sensing object, and the first device is the sensing node.

**22.** The method according to claim 21, wherein the sending, by the first device, the target sensing signal, and receiving a target reflected echo signal to obtain target echo data comprises:

obtaining, by the first device, a target transmit waveform parameter and a target receive waveform parameter from the target sensing waveform parameter; and
sending, by the first device, the target sensing signal by using the target transmit waveform parameter, and receiving the target reflected echo signal by using the target receive waveform parameter, so as to obtain the target echo data.

**23.** The method according to claim 21, wherein after the sending, by the first device, the target sensing signal, and receiving a target reflected echo signal, the method further comprises:

performing, by the first device, radar signal processing on the target echo data to obtain the sensing result of the sensing object;
performing, by the first device, radar signal processing on the target echo data to obtain the sensing result of the sensing object, and sending the sensing result of the sensing object to a sensing function network element;
sending, by the first device, the target echo data to a sensing function network element, wherein the target echo data is used by the sensing function network element to perform radar signal processing so as to obtain the sensing result of the sensing object;
sending, by the first device, the target echo data to a sensing function network element, wherein the target echo data is used by the sensing function network element to perform radar signal processing so as to obtain the sensing result of the sensing object and send the sensing result of the sensing object to the first device;
performing, by the first device, partial calculation of radar signal processing on the target echo data to obtain an intermediate sensing result of the sensing object, and sending the intermediate sensing result to a sensing function network element, wherein the intermediate sensing result is used by the sensing function network element to perform remaining calculation of the radar signal processing so as to obtain the sensing result of the sensing object; or
performing, by the first device, partial calculation of radar signal processing on the target echo data to obtain an intermediate sensing result of the sensing object, and sending the intermediate sensing result to a sensing function network element, wherein the intermediate sensing result is used by the sensing function network element to perform remaining calculation of the radar signal processing so as to obtain the sensing result of the sensing object and send the sensing result of the sensing object to the first device.

**24.** The method according to any one of claims 19 to 23, wherein the sensing signal waveform parameter set comprises at least one of the following: a sensing signal waveform parameter subset of a sensing-oriented signal, a sensing signal waveform parameter subset of a communication-oriented signal, and a sensing signal waveform parameter subset of an integrated sensing and communication signal; wherein

the sensing signal waveform parameter subset of the sensing-oriented signal comprises at least one of the following: sensing signal period, pulse width, duty cycle, bandwidth and frequency slope, orthogonal frequency division multiplexing OFDM subcarrier spacing and subcarrier number, spread spectrum code sequence, and phase coding sequence; and
the sensing signal waveform parameter subset of the communication-oriented signal comprises at least one of the following: configuration information of the communication-oriented signal, number of OFDM symbol periods comprised in sensing signal period, and offset of sensing signal period relative to subframe start position.

**25.** An apparatus for determining sensing signal period, wherein the apparatus comprises an obtaining module and a determining module; wherein

the obtaining module is configured to obtain first information, wherein the first information comprises at least one of the following: sensing prior information, coverage requirement information, sensing object type information, and motion parameter of a sensing object; and

the determining module is configured to determine, based on the first information obtained by the obtaining module, a target sensing signal period value from a sensing signal period parameter set, wherein the sensing signal period parameter set comprises at least one sensing signal period value; wherein

the sensing prior information is used to indicate a motion parameter range of the sensing object, the coverage requirement information is used to indicate a range coverage of the sensing object, and the sensing object type information is used to indicate a velocity range of the sensing object.

26. A communication device, comprising a processor, a memory, and a program or instructions stored in the memory and executable on the processor, wherein when the program or instructions are executed by the processor, the steps of the method for determining sensing signal period according to any one of claims 1 to 24 are implemented.

27. A readable storage medium, wherein the readable storage medium stores a program or instructions, and when the program or the instructions are executed by a processor, the steps of the method for determining sensing signal period according to any one of claims 1 to 24 are implemented.

Core network device

Access network device

12

11

Terminal

FIG. 1

| A first device obtains first information | 201 |

| The first device determines, based on the first information, a target sensing signal period value from a sensing signal period parameter set | 202 |

FIG. 2

FIG. 3

FIG. 4

FIG. 5

```
┌─────────────────────────────────────────────────────────────┐  201
│                                                               │ ⟋
│          A first device obtains first information             │
│                                                               │
└─────────────────────────────────────────────────────────────┘
                              │
                              ▼
┌─────────────────────────────────────────────────────────────┐  202
│  The first device determines, based on the first information, a target │ ⟋
│  sensing signal period value from a sensing signal period parameter set │
│                                                               │
└─────────────────────────────────────────────────────────────┘
                              │
                              ▼
┌─────────────────────────────────────────────────────────────┐  301
│  The first device determines, based on the target sensing signal period │ ⟋
│   value, a target sensing waveform parameter from a sensing signal │
│                  waveform parameter set                       │
└─────────────────────────────────────────────────────────────┘
                              │
                              ▼
┌─────────────────────────────────────────────────────────────┐  401
│  The first device generates a target sensing signal based on the target │ ⟋
│              sensing waveform parameter                       │
└─────────────────────────────────────────────────────────────┘
```

FIG. 6

```
┌─────────────────────────────┐          ┌─────────────────────────┐
│   Sensing function network  │          │      Sensing node       │
│          element            │          │                         │
└──────────────┬──────────────┘          └───────────┬─────────────┘
               │                                      │
┌──────────────┴──────────────┐                      │
│  201: Obtain first information │                    │
└──────────────┬──────────────┘                      │
               │                                      │
┌──────────────┴─────────────────────────┐           │
│ 202: Determine, based on the first      │           │
│ information, a target sensing signal     │          │
│ period value from a sensing              │          │
│ signal period parameter set              │          │
└──────────────┬─────────────────────────┘           │
               │                                      │
┌──────────────┴─────────────────────────┐           │
│ 301: Determine, based on the target      │          │
│ sensing signal period value, a target    │          │
│ sensing waveform parameter from a        │          │
│ sensing signal waveform parameter set    │          │
└──────────────┬─────────────────────────┘           │
               │      402: Send the target sensing    │
               │         waveform parameter           │
               │─────────────────────────────────────▶│
               │                         ┌────────────┴──────────────────────┐
               │                         │ 403: Receive the target sensing    │
               │                         │ waveform parameter, and generate a │
               │                         │ target sensing signal based on the │
               │                         │ target sensing waveform parameter  │
               │                         └────────────┬──────────────────────┘
               │                                      │
```

FIG. 7

Apparatus for determining
sensing signal period — 30

Obtaining module — 31

Determining module — 32

FIG. 8

5000

Communication device

5001 — Processor ⟺ Memory — 5002

FIG. 9

FIG. 10

FIG. 11

FIG. 12

| INTERNATIONAL SEARCH REPORT | International application No. |
|---|---|
| | **PCT/CN2022/140400** |

| A. CLASSIFICATION OF SUBJECT MATTER |
|---|
| H04W4/02(2018.01)i |
| According to International Patent Classification (IPC) or to both national classification and IPC |

| B. FIELDS SEARCHED |
|---|
| Minimum documentation searched (classification system followed by classification symbols) |
| IPC: H04W, H04L, H04B |
| Documentation searched other than minimum documentation to the extent that such documents are included in the fields searched |
| Electronic data base consulted during the international search (name of data base and, where practicable, search terms used) |
| CNTXT, ENTXTC, ENTXT, CNKI, 3GPP: 感知, 雷达, 周期, 无模糊距离, 无模糊速度, 速度, 范围, 运动, 距离, ISAC, MUR, MUV, sense, frequency, period, speed, scope, distance |

| C. DOCUMENTS CONSIDERED TO BE RELEVANT |
|---|

| Category* | Citation of document, with indication, where appropriate, of the relevant passages | Relevant to claim No. |
|---|---|---|
| X | CN 103546888 A (HUAWEI TECHNOLOGIES CO., LTD.) 29 January 2014 (2014-01-29) claims 1-5, and description, paragraphs 70-162 | 1-3, 19-27 |
| A | CN 113452498 A (SOUTHEAST UNIVERSITY) 28 September 2021 (2021-09-28) entire document | 1-27 |
| A | CN 108061881 A (CHINA FAW CO., LTD.) 22 May 2018 (2018-05-22) entire document | 1-27 |
| A | CN 112687107 A (ALLRIDE AI TECHNOLOGY CO., LTD.) 20 April 2021 (2021-04-20) entire document | 1-27 |
| A | US 2019219688 A1 (HUAWEI TECHNOGOLY CO., LTD.) 18 July 2019 (2019-07-18) entire document | 1-27 |

☐ Further documents are listed in the continuation of Box C. ☑ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "D" document cited by the applicant in the international application | "X" document of particular relevance; the claimed invention cannot be considered novel or cannot be considered to involve an inventive step when the document is taken alone |
| "E" earlier application or patent but published on or after the international filing date | |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | "&" document member of the same patent family |
| "P" document published prior to the international filing date but later than the priority date claimed | |

| Date of the actual completion of the international search | Date of mailing of the international search report |
|---|---|
| **28 February 2023** | **02 March 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| Facsimile No. **(86-10)62019451** | Telephone No. |

Form PCT/ISA/210 (second sheet) (July 2022)

**INTERNATIONAL SEARCH REPORT**
**Information on patent family members**

International application No.

**PCT/CN2022/140400**

| Patent document cited in search report | | | Publication date (day/month/year) | Patent family member(s) | | | Publication date (day/month/year) |
|---|---|---|---|---|---|---|---|
| CN | 103546888 | A | 29 January 2014 | None | | | |
| CN | 113452498 | A | 28 September 2021 | None | | | |
| CN | 108061881 | A | 22 May 2018 | None | | | |
| CN | 112687107 | A | 20 April 2021 | None | | | |
| US | 2019219688 | A1 | 18 July 2019 | WO | 2018058374 | A1 | 05 April 2018 |
| | | | | EP | 3503490 | A1 | 26 June 2019 |
| | | | | EP | 3503490 | A4 | 21 August 2019 |

Form PCT/ISA/210 (patent family annex) (July 2022)

**REFERENCES CITED IN THE DESCRIPTION**

**Patent documents cited in the description**

- CN 202111644152